# EUROPEAN PATENT SPECIFICATION

(11) **EP 4 535 149 B1**
(45) Date of publication and mention of the grant of the patent: **25.11.2026**
(21) Application number: 22948612.1
(22) Date of filing: 30.06.2022
(51) Int. Cl.: G06F 12/0831, G06F 3/06

(54) **REQUEST PROCESSING METHOD, APPARATUS AND SYSTEM**
ANFRAGEVERARBEITUNGSVERFAHREN, -VORRICHTUNG UND -SYSTEM
PROCÉDÉ DE TRAITEMENT DE DEMANDE, APPAREIL ET SYSTÈME

(43) Date of publication of application: 09.04.2025
(73) Proprietor: Huawei Technologies Co., Ltd., Shenzhen, Guangdong 518129 (CN)
(72) Inventor: LI, Dongxu, Shenzhen, Guangdong 518129 (CN); ZHANG, Xu, Shenzhen, Guangdong 518129 (CN); LI, Bojie, Shenzhen, Guangdong 518129 (CN)
(74) Representative: Maiwald GmbH
(86) International application number: PCT/CN2022/103115
(87) International publication number: WO 2024/000510

(56) References cited:
- CN-A- 109 564 548
- CN-A- 109 661 650
- US-A1- 2020 349 075

## Description

### TECHNICAL FIELD

This application relates to the field of communication technologies, and in particular, to a method for accessing a memory of a remote device, an apparatus, and a system.

### BACKGROUND

With development of technologies, use of distributed applications prevails. A distributed application is an application distributed on different physical nodes, and the physical nodes are usually computers. In other words, when the distributed application executes a task or a service, data needs to be exchanged among a plurality of physical nodes. In this process, data is usually stored in a storage of a physical node. When the data needs to be used, the data is loaded to a memory by a processor of the physical node. In this way, remote memory access, which means that a computer (a local device) accesses a memory of another computer (a remote device) to operate data in the memory, is a very basic function. Technically, accessing data is essentially accessing a storage medium related to the data, and includes at least two scenarios: reading the data and writing the data.

Generally, a memory of the local device is accessed through a bus, and a memory of the remote device is accessed through a network. For example, remote access may be implemented through interaction between network devices (for example, network interface cards). Specifically, a device needs to use a network communication technology, for example, a transmission control protocol/internet protocol (Transmission Control Protocol/Internet Protocol, TCP/IP) or remote direct memory access (Remote Direct Memory Access, RDMA), to access a memory of another device.

To resolve a problem of low efficiency of accessing the memory by the processor, a cache (cache) structure is introduced in a modern computer system. The use of spatial locality principle of a program greatly helps a cache technology significantly accelerate a memory access operation of the processor. In a multi-core architecture, each processor core has its own cache. In this case, there is a need to ensure cache coherence between cores to make all of the processor cores have coherent memory data.

In existing implementations, for a same memory of the remote device, only concurrent access of a plurality of network devices (for example, network interface cards) is supported, or only concurrent access of a local processor is supported. This limits concurrency of a remote operation. US 2020/349075 A1 discloses a cache coherent, multiprocessor shared memory system to enforce cache coherency using hardware- or software-based protocols and mechanisms to arbitrate access to the shared memory and enable the processors to see the same data.

### SUMMARY

The present invention is defined by the independent claims. Further aspects of the present invention are specified by the other claims. Embodiments of this application provide a method for accessing a memory of a remote device, an apparatus, and a system, to improve concurrency of data access.

To achieve the foregoing objective, the following technical solutions are used in embodiments of this application.

According to a first aspect, an embodiment of this application provides a request processing method, applied to a network device of a first node. The first node is a request processing device or a component (for example, a chip) in the device. The method includes: obtaining a write request from a second node, where the write request indicates to write first data into first memory space of the first node; obtaining first information from a first location of the first memory space, where the first information indicates that the first memory space is in a state in which data writing is performed by a processor of the first node (for example, before a network device of the second node obtains the first information from the first location of the first memory space, a CPU may perform a write operation on the first memory space, and set the information at the first location to indicate that the first memory space is in the state in which data writing is performed by the processor of the first node); obtaining second information from the first location after a preset time based on the first information (if the first information indicates that the first memory space is in the state in which data writing is performed by the processor of the first node, the information at the first location (the second information) may be re-obtained after a period of time, to ensure atomicity of the write operation); and writing the first data into the first memory space based on the second information indicating that the first memory space is not in the state in which data writing is performed by the processor.

In an existing implementation, for a same memory, only access of a plurality network devices is supported, or only access of a local CPU is supported. In embodiments of this application, a memory access mode that supports both the network device and the processor is constructed. In this mode, both the network device and the CPU can access the same memory and implement atomic write to the memory.

In an implementation, information is obtained from memory space (for example, when the first information is obtained from the first location, and subsequently information is obtained from another location, "obtaining" may be understood as reading).

In an implementation, the information at the first location may indicate, by using different identifiers, whether the first memory space is in a state in which data writing is performed by the network device or another processor of the first node. For example, "1" may indicate that the first memory space is in the state in which data writing is performed by the network device or the another processor of the first node, and "0" may indicate that the first memory space is not in the state in which data writing is performed by the network device or the another processor of the first node.

In an implementation, the write request may indicate to write the first data into the first memory space in a memory of the first node. For example, the write request may include an address (a virtual address or a physical address, where the first memory space may be uniquely indicated based on the address) corresponding to the first memory space. For example, the address may include a start address and an address offset.

In a possible implementation, the first memory space is a memory object (object), the memory object includes a plurality of cache lines (cache lines), and the first location is at a header location of a header cache line in the plurality of cache lines. For example, the first information may be stored by using a preset quantity of first bytes of the header cache line, for example, first 8 bytes or first 16 bytes.

In a possible implementation, the method further includes: obtaining an exclusive (exclusive) right of the first memory space before the writing the first data into the first memory space; and maintaining occupation of the exclusive right of the first memory space (or which may be referred to as not releasing the exclusive right of the first memory space) before the writing the first data into the first memory space is completed. The exclusive right may be an E state specified in an object coherence protocol of a heterogeneous system. The E state may indicate that no other cache has a copy of data, the copy of the data in the memory is also the latest, and data is directly returned for a read operation. The exclusive right is not released, so that another network device does not perform a write operation at the same time when the network device performs the write operation, thereby ensuring atomicity of the write operation.

In a possible implementation, the method further includes: before the obtaining first information from a first location of the first memory space, obtaining the exclusive right of the first memory space; and releasing the exclusive right of the first memory space based on the first information indicating that the first memory space is in the state in which data writing is performed by the processor of the first node.

In a possible implementation, the method further includes: obtaining a read request from the second node, where the read request indicates to read data from second memory space of the first node; and after obtaining a shared (shared) access right of the second memory space, reading the data from the second memory space of the first node. The shared access right may be an S state specified in the object coherence protocol of the heterogeneous system. The shared access right indicates that data of the memory object is the latest, and another cache has a copy of the data.

In a possible implementation, if a shared access right of the memory object can be obtained, it indicates that the memory object is not in a state in which data writing is performed by the another network device, and the data can be read.

In a possible implementation, in a process of reading the data from the second memory space, it is sensed that the second memory space is in a state in which data writing is performed by another network device of the first node, and the process of reading the data from the second memory space is terminated; and the data is re-read from the second memory space based on the re-obtained shared access right of the second memory space. If the data is written into the memory object in the data read process, the read data is not the latest data. In this case, the network device of the second node senses that the memory object is in an invalid state, and the data read process needs to be interrupted and a waiting state is entered. After the preset time, a shared access right of the memory object may be re-obtained. For example, if the shared access right of the memory object is re-obtained after the preset time, it indicates that the memory object is not in a state in which data writing is performed, and the data can be read again.

In a possible implementation, before the data is read from the second memory space, third information is obtained from a second location of the first memory space, where the information at the second location indicates a latest version of the data in the first memory space; after the data is read from the second memory space, fourth information is obtained from the second location; and when the fourth information is inconsistent with the third information, read failure information is returned to the second node.

The information at the second location may indicate the latest version of the data in the first memory space. When the fourth information is inconsistent with the third information, it may be considered that, in the process of reading the data from the second memory space, the processor performs a data write operation on the second memory space, and it may be further considered that the read data is invalid. In the foregoing manner, atomic read of the data can be ensured.

According to a second aspect, this application provides a request processing method, applied to a processor of a first node. The method includes: obtaining a first write request, where the first write request indicates to write first data into first memory space of the first node; obtaining first information from a first location of the first memory space, where the first information indicates that the first memory space is not in a state in which data writing is performed by a network device or another processor of the first node; and writing the first data into the first memory space based on the first information.

In a possible implementation, the write request may indicate to write the first data into the first memory space in a memory of the first node. For example, the write request may include an address (a virtual address or a physical address, where the first memory space may be uniquely indicated based on the address) corresponding to the first memory space. For example, the address may include a start address and an address offset.

In a possible implementation, in response to a write request of the first memory space, a network device of a second node may obtain an exclusive right of the first memory space and obtain first information from a first location of the first memory space. The information at the first location may indicate whether the first memory space is in a state in which data writing is performed by the processor of the first node.

In a possible implementation, the first memory space is a memory object (object), the memory object includes a plurality of cache lines (cache lines), and the first location is at a header location of a header cache line in the plurality of cache lines. For example, the first information may be stored by using a preset quantity of first bytes of the header cache line, for example, first 8 bytes or first 16 bytes.

In a possible implementation, a second write request sent by the second node is obtained, where the second write request indicates to write second data into second memory space of the first node; second information is obtained from a first location of the second memory space, where the second information indicates that the second memory space is in the state in which data writing is performed by the network device or the another processor of the first node; and data write failure information is returned to the second node based on the second information. After it is determined that the first memory space is in the state in which data writing is performed, it is directly determined that writing fails. Therefore, this can avoid that a CPU is blocked for an excessively long period of time because the network device is in the state in which data writing is performed for an excessively long period of time.

In a possible implementation, the method further includes: obtaining a read request, where the read request indicates to read data from the second memory space of the first node; after reading the data from the second memory space based on the read request, obtaining third information from a second location of the second memory space, where the third information indicates that the second memory space is in the state in which data writing is performed by the network device or the another processor of the first node; and determining, based on the third information, that data writing fails.

In a possible implementation, the method further includes: obtaining a read request, where the read request indicates to read data from the second memory space of the first node; obtaining fourth information from a second location of the second memory space, where the information at the second location indicates a latest version of the data in the second memory space; after reading the data from the second memory space based on the read request, obtaining fifth information from the second location; and when the fourth information is inconsistent with the fifth information, determining that reading fails.

According to a third aspect, this application provides a request processing method, applied to a network device of a first node. The method includes: obtaining a write request from a second node, where the write request indicates to write first data into first memory space of the first node; and obtaining an exclusive right of the first memory space, writing the first data into the first memory space, and maintaining occupation of the exclusive right of the first memory space before the writing the first data into the first memory space is completed.

In an existing implementation, for a same memory, only access of a plurality network devices is supported, or only access of a local CPU is supported. In addition, to implement atomic read or atomic write of the network device, information indicating whether a memory object is in a state in which data writing is performed and information indicating an updated latest version of data may be configured on a cache line (cache line) of the memory object. In other words, extra storage space is needed to store the foregoing information, which causes a waste of bandwidth. In addition, a CPU needs to perform a strip operation (in a process of reading data, the foregoing information is read; however, the information is not required by a source end; and therefore, a processor needs to strip the data and return data after stripping to the source end), and an extra time and calculation overheads are needed. In embodiments of this application, in a mode in which only the network device is supported to access the memory, atomic read/write for the memory may be implemented without the information indicating whether the memory object is in the state in which data writing is performed and the information indicating the updated latest version of the data. In this way, a waste of bandwidth can be reduced. In addition, because the CPU does not need to perform a strip operation on the foregoing information, a time and calculation overheads are reduced.

In a possible implementation, the first memory space does not include a location used to store an indication of whether the first memory space is in a state in which data writing is performed by the network device of the first node.

In a possible implementation, after a write operation of the first data is completed, a network device of the second node may release an exclusive access right of the memory object, so that another network device can obtain the exclusive access right of the memory object when performing a write operation on the memory object.

In a possible implementation, after completing the write operation indicated by the write request, the network device of the second node may return an execution result to the first node (for example, return the execution result to the network device of the first node). The execution result may indicate that execution succeeds or fails.

In a possible implementation, the network device of the second node may further receive a read request sent by the second node. The read request indicates to read data from second memory space of the first node.

The read request may indicate to read the data from the second memory space in a memory of the first node. For example, the read request may include an address (a virtual address or a physical address, where the second memory space may be uniquely indicated based on the address) corresponding to the second memory space. For example, the address may include a start address and an address offset.

The second memory space may be a memory object (object). In other words, an address (one or more addresses) included in the read request may include an address corresponding to the memory object, and the memory object may include a plurality of cache lines (cache lines).

In a possible implementation, in response to the read request, the network device of the second node may obtain a shared access right of the second memory space and read the data from the second memory space.

In a possible implementation, the first memory space may be a memory object, the memory object may include a plurality of cache lines, and the network device of the second node may obtain a shared access right of a first cache line of the memory object to further obtain a shared access right of an entire memory object. The shared access right may be an S state specified in an object coherence protocol of a heterogeneous system. The shared access right indicates that data of the memory object is the latest, and another cache has a copy of the data.

In a possible implementation, if a shared access right of the memory object can be obtained, it indicates that the memory object is not in a state in which data writing is performed by the another network device, and the data can be read.

In a possible implementation, in a process of reading the data from the second memory space, it is sensed that the second memory space is in a state in which data writing is performed by another network device of the first node, and the process of reading the data from the second memory space is terminated; and the data is re-read from the second memory space based on the re-obtained shared access right of the second memory space. If the data is written into the memory object in the data read process, the read data is not the latest data. In this case, the network device of the second node senses that the memory object is in an invalid state, and the data read process needs to be interrupted and a waiting state is entered. After a preset time, the shared access right of the memory object may be re-obtained. For example, if the shared access right of the memory object is re-obtained after the preset time, it indicates that the memory object is not in a state in which data writing is performed, and the data can be read again.

According to a fourth aspect, this application provides a request processing apparatus, and the apparatus is located in a network device of a first node. The apparatus includes:
an obtaining module, configured to: obtain a write request from a second node, where the write request indicates to write first data into first memory space of the first node;
read first information from a first location of the first memory space, where the first information indicates that the first memory space is in a state in which data writing is performed by a processor of the first node; and
obtain second information from the first location after a preset time based on the first information, where the second information indicates that the first memory space is not in the state in which data writing is performed by the processor; and
a data write module, configured to write the first data into the first memory space based on the second information.

The fourth aspect provides an apparatus corresponding to the method in the first aspect, and the apparatus has a function of implementing the request processing method in any implementation of the first aspect. This function may be implemented by hardware, or may be implemented by a combination of software and hardware. The hardware or the software includes one or more modules corresponding to the function. Many nouns in the fourth aspect correspond to the nouns in the first aspect, and are also associated with the method in the second aspect and the method in the third aspect. Therefore, descriptions of various sentences or words in the first aspect, the second aspect, and the third aspect, descriptions of various implementations, and descriptions of technical effects are also applicable to the fourth aspect if the descriptions are involved in the fourth aspect. Details are not described again.

In a possible implementation, the first memory space is a memory object (object), the memory object includes a plurality of cache lines (cache lines), and the first location is at a header location of a header cache line in the plurality of cache lines.

In a possible implementation, the obtaining module is further configured to: obtain an exclusive (exclusive) right of the first memory space before writing the first data into the first memory space; and maintain occupation of the exclusive right of the first memory space before writing the first data into the first memory space is completed.

In a possible implementation, the obtaining module is further configured to:
before obtaining the first information from a first location of the first memory space, obtain the exclusive right of the first memory space.

The apparatus further includes:
a release module, configured to release the exclusive right of the first memory space based on the first information indicating that the first memory space is in the state in which data writing is performed by the processor of the first node.

In a possible implementation, the obtaining module is further configured to:
obtain a read request from the second node, where the read request indicates to read data from second memory space of the first node.

The apparatus further includes:
a data read module, configured to: after obtaining a shared (shared) access right of the second memory space, read the data from the second memory space of the first node.

In a possible implementation, the data read module is specifically configured to:
in a process of reading the data from the second memory space based on the read request, sense that the second memory space is in a state in which data writing is performed by another network device of the first node, and terminate the process of reading the data from the second memory space; and
re-read the data from the second memory space based on the re-obtained shared access right of the second memory space.

In a possible implementation, the obtaining module is further configured to:
before reading the data from the second memory space, obtain third information from a second location of the first memory space, where the information at the second location indicates a latest version of the data in the first memory space; and
after reading the data from the second memory space, obtain fourth information from the second location.

The apparatus further includes:
a data returning module, configured to: when the fourth information is inconsistent with the third information, return read failure information to the second node.

According to a fifth aspect, an embodiment of this application provides a request processing apparatus, and the apparatus is located in a processor of a first node. The apparatus includes:
an obtaining module, configured to: obtain a first write request, where the first write request indicates to write first data into first memory space of the first node; and
obtain first information from a first location of the first memory space, where the first information indicates that the first memory space is not in a state in which data writing is performed by a network device or another processor of the first node; and
a data write module, configured to write the first data into the first memory space based on the first information.

The fifth aspect provides an apparatus corresponding to the method in the second aspect, and the apparatus has a function of implementing the request processing method in any implementation of the second aspect. This function may be implemented by hardware, or may be implemented by a combination of software and hardware. The hardware or the software includes one or more modules corresponding to the function. Many nouns in the fifth aspect correspond to the nouns in the second aspect, and are also associated with the method in the first aspect and the method in the third aspect. Therefore, descriptions of various sentences or words in the first aspect, the second aspect, and the third aspect, descriptions of various implementations, and descriptions of technical effects are also applicable to the fifth aspect if the descriptions are involved in the fifth aspect. Details are not described again.

In a possible implementation, the first memory space is a memory object, the memory object includes a plurality of cache lines, and the first location is at a header location of a header cache line in the plurality of cache lines.

In a possible implementation, the obtaining module is further configured to:
obtain a second write request, where the second write request indicates to write second data into second memory space of the first node; and
obtain second information from a first location of the second memory space, where the second information indicates that the second memory space is in the state in which data writing is performed by the network device or the another processor of the first node.

The apparatus further includes:
a data returning module, configured to return data write failure information to the second node based on the second information.

In a possible implementation, the obtaining module is further configured to:
obtain a read request, where the read request indicates to read data from the second memory space of the first node; and
after reading the data from the second memory space based on the read request, obtain third information from a second location of the second memory space, where the third information indicates that the second memory space is in the state in which data writing is performed by the network device or the another processor of the first node.

The apparatus further includes:
a data returning module, configured to determine, based on the third information, that data writing fails.

In a possible implementation, the obtaining module is further configured to:
obtain a read request, where the read request indicates to read data from the second memory space of the first node;
obtain fourth information from a second location of the second memory space, where the information at the second location indicates a latest version of the data in the second memory space; and
after reading the data from the second memory space based on the read request, obtain fifth information from the second location.

The apparatus further includes:
a data returning module, configured to: when the fourth information is inconsistent with the fifth information, determine that reading fails.

According to a sixth aspect, an embodiment of this application provides a request processing apparatus, and the apparatus is located in a network device of a first node. The apparatus includes:
an obtaining module, configured to: obtain a write request from a second node, where the write request indicates to write first data into first memory space of the first node; and
obtain an exclusive right of the first memory space; and
a data write module, configured to: write the first data into the first memory space; and maintain occupation of the exclusive right of the first memory space before writing the first data into the first memory space is completed.

The sixth aspect provides an apparatus corresponding to the method in the third aspect, and the apparatus has a function of implementing the request processing method in any implementation of the third aspect. This function may be implemented by hardware, or may be implemented by a combination of software and hardware. The hardware or the software includes one or more modules corresponding to the function. Many terms in the sixth aspect correspond to the terms in the third aspect, and are also associated with the method in the first aspect and the method in the second aspect. Therefore, descriptions of various sentences or words in the first aspect, the second aspect, and the third aspect, descriptions of various implementations, and descriptions of technical effects are also applicable to the sixth aspect if the descriptions are involved in the sixth aspect. Details are not described again.

In a possible implementation, the first memory space does not include a location used to store an indication of whether the first memory space is in a state in which data writing is performed by the network device of the first node.

In a possible implementation, the obtaining module is further configured to:
obtain a read request from the second node, where the read request indicates to read data from second memory space of the first node; and
obtain a shared access right of the second memory space.

A data read module is configured to the read data from the second memory space.

In a possible implementation, the data read module is specifically configured to:
in a process of reading the data from the second memory space, sense that the second memory space is in a state in which data writing is performed by another network device of the first node, and terminate the process of reading the data from the second memory space; and
re-read the data from the second memory space based on the re-obtained shared access right of the second memory space.

According to a seventh aspect, an embodiment of this application provides a chip, the chip includes a processing circuit and a storage medium, and the storage medium stores instructions. When the instructions are executed by the processing circuit, the chip performs the request processing method according to any one of the foregoing aspects.

According to an eighth aspect, an embodiment of this application provides a request processing device. The device includes a storage medium, a processing circuit, a memory management unit MMU, and a network device. The storage medium is coupled to the processing circuit. The storage medium is configured to store computer program code. The computer program code includes computer instructions. When the computer instructions are executed by the processing circuit, the request processing method according to any one of the foregoing aspects is performed.

According to a ninth aspect, an embodiment of this application provides a request processing device. The device includes a storage medium, a processing circuit, and a network device. The storage medium is coupled to the processing circuit. The storage medium is configured to store computer program code. The computer program code includes computer instructions. When the computer instructions are executed by the processing circuit, the network device is indicated to perform the request processing method according to any one of the foregoing aspects.

According to a tenth aspect, a communication apparatus is provided, including a processor. The processor is configured to: after coupling to a storage and reading instructions in the storage, perform, based on the instructions, the request processing method according to any one of the foregoing aspects.

According to an eleventh aspect, an embodiment of this application provides a communication apparatus. The apparatus may be a chip system. The chip system includes a processor, and may further include a storage, configured to implement a function of the method described in any one of the foregoing aspects. The chip system may include a chip, or may include a chip and another discrete device.

According to a twelfth aspect, a communication apparatus is provided. The apparatus may be a circuit system, the circuit system includes a processing circuit, and the processing circuit is configured to perform the method according to any one of the foregoing aspects.

According to a thirteenth aspect, an embodiment of this application further provides a computer-readable storage medium, including instructions. When the instructions are run on a computer, the computer is enabled to perform the method according to any one of the foregoing aspects.

According to a fourteenth aspect, an embodiment of this application further provides a computer program product, including instructions. When the instructions are run on a computer, the computer is enabled to perform the method according to any one of the foregoing aspects.

According to a fifteenth aspect, an embodiment of this application provides a system, and the system includes the request processing apparatus according to any implementation of the fourth aspect and the request processing apparatus according to any implementation of the fifth aspect.

### BRIEF DESCRIPTION OF DRAWINGS

FIG. 1 is a diagram of a request processing architecture according to an embodiment of this application;
FIG. 2 is a diagram of a request processing architecture according to an embodiment of this application;
FIG. 3 is a diagram of a request processing architecture according to an embodiment of this application;
FIG. 4A is a schematic flowchart of a request processing method according to an embodiment of this application;
FIG. 4B is a schematic flowchart of a request processing method according to an embodiment of this application;
FIG. 4C is a schematic flowchart of a request processing method according to an embodiment of this application;
FIG. 5 is a diagram of a request processing architecture according to an embodiment of this application;
FIG. 6A is a schematic flowchart of a request processing method according to an embodiment of this application;
FIG. 6B is a schematic flowchart of a request processing method according to an embodiment of this application;
FIG. 7A is a schematic flowchart of a request processing method according to an embodiment of this application;
FIG. 7B is a schematic flowchart of a request processing method according to an embodiment of this application;
FIG. 7C is a schematic flowchart of a request processing method according to an embodiment of this application;
FIG. 8 is a diagram of a request processing apparatus according to an embodiment of this application;
FIG. 9 is a diagram of a request processing apparatus according to an embodiment of this application;
FIG. 10 is a diagram of a request processing apparatus according to an embodiment of this application; and
FIG. 11 is a diagram of a request processing device according to an embodiment of this application.

### DESCRIPTION OF EMBODIMENTS

First, some expressions that may appear in this application are described.

"First", "second", and the like are intended to distinguish between different objects or distinguish between different processing of a same object, but are not used to describe a particular order of the objects.

"At least one" means one or more, and "a plurality of" means two or more.

"And/or" describes an association relationship between associated objects, and represents that three relationships may exist. For example, A and/or B may represent the following cases: A exists alone, both A and B exist, and B exists alone, where A and B may be singular or plural.

The character "/" usually indicates an "or" relationship between the associated objects. For example, A/B may indicate A or B.

In addition, the terms "include", "comprise", and "have" in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in this application, the word such as "example" or "for example" is used to represent giving an example or a description. Any implementation (for example, an embodiment of this application) or design solution described as an "example" or "for example" should not be explained as being more preferred or having more advantages than another implementation or design solution. To be precise, use of the word such as "example" or "for example" is intended to present a relative concept in a specific manner.

In the specification and the accompanying drawings of this application, "of (English: of)", "relevant (English: relevant)", and "corresponding (English: corresponding)" may be used interchangeably sometimes. It should be noted that, when a difference between "of", "relevant", and "corresponding" is not emphasized, meanings expressed by "of", "relevant", and "corresponding" are consistent.

The following briefly describes some terms in this application.

Enhanced cache coherence (enhanced cache coherence, ECC): Cache coherence means a mechanism in a computer system architecture that keeps coherence between cache data of a plurality of CPU cores and main memory data. However, an enhanced cache coherence capability defined in this patent means that not only coherence of memory data accessed by a central processing unit (Central Processing Unit, CPU) or another type of processors can be ensured, but also coherence of memory data accessed by a CPU and a network device can be ensured.

Enhanced cache coherence capability network device (enhanced cache coherence network interface card, ECC NIC): An enhanced cache coherence capability network device (network interface card) is referred to as an ECC NIC. In the present invention, the ECC NIC is used for network transmission.

Cache coherence domain (cache coherence domain, CC domain): Devices in a cache coherence domain need to comply with a common cache coherence protocol.

Remote memory access: Remote memory access means that a memory to be accessed by a computer is not on the local computer but on another computer connected over a network. Remote memory access can implement sharing of the memory within a cluster.

Unified bus (unified bus, UBUS): The UBUS is a large-scale and high-performance interconnect bus based on memory semantics, and provides unified interconnection interfaces and communication protocols for data centers.

Network device of a UBUS endpoint (unified bus endpoint, UBEP): indicates a network device of a UBUS endpoint. The UBUS may perform cross-node data transmission by using the network device. Functions of the UBEP are similar to those of a network interface card, and have an ECC capability.

Node: The node is a device that has at least one of a data processing function and a data storage function. An operating system is run on the node, and the node may be distinguished by using the operating system. That is, different operating systems are run on different nodes. In other words, hardware and software used for running an operating system may be considered as belonging to a same node. In this application, the node may be totally a physical machine, for example, a terminal or a network device such as a server or a server agent. The node may alternatively be a device in the physical machine, for example, a processor, a memory, and a storage. When a physical machine includes two nodes, different operating systems are run on the two nodes. For example, the physical machine includes a central processing unit (Central Processing Unit, CPU) running an operating system 1 and a graphics processing unit (Graphics Processing Unit) running an operating system 2. In this case, the central processing unit and the graphics processing unit may be considered to belonging to different nodes. When the node is a device, it is a relatively independent entity in hardware. "The independent entity" may be understood as a circuit or module with a dedicated function, and the device is packaged or assembled on the physical machine. Data access in this application may be understood as that a node accesses, by using an instance, data maintained by another node. A device in the node is a part or a component in the node. For example, when the node is a physical machine, both a CPU and a memory are devices in the node. The physical machine is a computer packaged into a product, for example, a server, a desktop computer, an all-in-one PC (All-In-One PC, AIO), a notebook computer, or a smartphone.

Terminal: The terminal may include a user terminal device (User Equipment, UE) of a desktop type, a laptop type, a handheld type, or a vehicle-mounted type, such as a smartphone, a cellular phone, a desktop computer, a tablet computer, a smart television, a smart television box, an ultra-mobile personal computer (Ultra-mobile Personal Computer, UMPC), a laptop computer, a personal digital assistant (Personal Digital Assistant, PDA), a portable multimedia player (Portable Multimedia Player, PMP), a dedicated media player, a consumer communication device, a wearable device (for example, a smart watch), an AR (enhanced reality)/VR (virtual reality) device, or another type of communication devices.

Local: For an instance, a node that runs the instance is a local node. For example, a full name of a local memory should be "a local memory of an instance", namely, a memory of a node that runs the instance. The node that runs the instance may be described at different granularities, for example, may be only a processor, for example, a central processing unit (Central Processing Unit, CPU) or a graphics processing unit (Graphics Processing Unit, GPU), or may be a total physical machine, that is, includes a processing circuit and a storage medium. Specific descriptions to be used depend on whether an involved data access process is performed across physical machines.

Remote: "Remote" is a concept relative to "local". For an instance, a node other than a node that runs the instance is a remote node. "Remote" may represent a device having a computing capability, or may represent a device configured to store data.

Identifier: An identifier is used to distinguish one type of objects or one object from other objects of a same type or different types, for example, an identifier of a node, an identifier of a network, and an identifier of a network interface card. The identifier may be a name or a number, or a distinguishing feature may be used as the identifier, for example, a type is used as the identifier. Implementation of various identifiers is not limited in this application, provided that the identifiers can be used for distinguishing. For example, in some implementations of this application, an identifier of virtual address space of an instance is used as an identifier of the instance, instead of using a common manner of using a name or a number of the instance as the identifier of the instance.

Bus (bus): A bus in a conventional technology is an internal structure of a computer, and is a common communication trunk for transmitting information between various functional components in the computer. The bus of the computer may be classified into a data bus, an address bus, and a control bus, to transmit data, an address of the data, and a control signal, respectively. In this application, the bus, which short for a high-performance interconnect bus (High-Performance Interconnect Bus, HPIB), may not only connect various components inside the computer but also replace a network, and may be laid between different computers, to connect different computers. Each computer accesses the high-performance interconnect bus via a bus endpoint. The bus endpoint is equivalent to a communication module such as a network interface card or a baseband antenna in a network technology. This application describes how to use functions of the bus to process a request for reading data or writing data, that is, a method for accessing a remote storage medium, after hardware is laid out. Specific structures of the HPIB and the bus endpoint are not described in detail in this application.

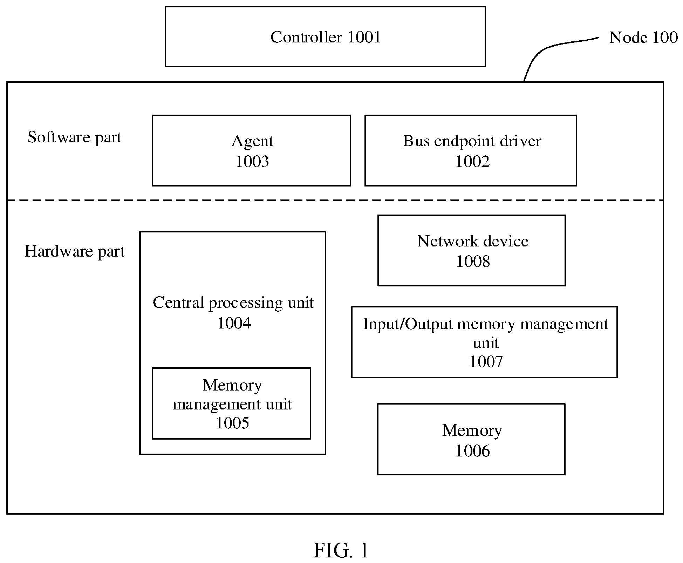

Cache coherence protocol: To resolve a problem of low efficiency exists when the CPU accesses the memory, a cache structure is introduced in a modern computer system. The use of spatial locality principle of a program greatly helps a cache technology accelerate a memory access operation of the CPU. However, in a multi-core architecture, each CPU core has its own cache, as shown in FIG. 1. In this case, there is a need to ensure cache coherence between cores to make all of the CPU cores have coherent memory data. Therefore, a plurality of cache coherence protocols emerge, and a most typical one is an MESI cache coherence protocol.

As defined in the MESI, a cache line (cache line) is in one of the following four states:
Modified (modified) (an M state): In this state, data is the latest, is modified (a Dirty state), and can be written. No other cache has a copy of the data, and the data in the memory expires. In addition, a read request of another processor needs to be responded.
Exclusive (exclusive) right (an E state): No other cache has a copy of data, the copy of the data in the memory is the latest, and data is directly returned for a read operation.
Shared (shared) access right (an S state): Data is the latest but cannot be written, data in the memory is also the latest, and other caches have copies of the data.
Invalid (invalid) (an I state): Data is invalid.

For a cache line of a CPU processing core, an MESI status of the cache line is changed as follows without considering impact of caches of other CPU processing cores:
A cache of each processor core snoops (snoop) operations performed by other caches on data. If the cache finds that the other caches perform operations on valid data cached by the cache, the cache responds accordingly. Specific behavior of the cache is also defined in the MESI protocol. Typically, if a cache line in the shared state receives an invalidate message sent from another cache, it means that another CPU core is writing the data. At this time, the cache line in the shared state should be transferred to the invalid state, indicating that the data is invalid.

Memory object: indicates a minimum granularity of accessing data in a memory. For example, an address (a physical address or a virtual address) may uniquely indicate a memory object in the memory. In an implementation, a memory object may include a plurality of cache lines (cachelines), for example, may include three cache lines.

With reference to FIG. 1, the following describes an architectural diagram to which this application is applied. A controller (controller) 1001 in the figure may be on a same node with other components, or may be on different nodes with other components, and the remaining components may be understood as belonging to a node. It should be understood that the architecture described in FIG. 1 includes a node 100 and the controller 1001, and the controller 1001 is illustrated as not included in the node 100. It should be understood that the architecture described in FIG. 1 is merely an example for ease of understanding, and is not a limitation on an architecture that can be used by the node in this application. Another software part, for example, an operating system, and another hardware part, for example, a display, in the node 100 are not displayed.

The architecture includes two parts: hardware and software. Specifically, the hardware includes the following:
A central processing unit (central processing unit, CPU) 1004 and a memory management unit (Memory Management Unit, MMU) 1005: The central processing unit 1004 and the memory management unit 1005 are usually packaged into a chip. The CPU runs an application, and initiates a request for reading data or writing data. The request is also referred to as a memory access request below, namely, a request for accessing a storage medium, because an address in the storage medium (for example, a memory) needs to be found for reading the data or writing the data. The MMU is responsible for translation of the address of the memory access request initiated by the CPU.

A memory (Memory) 1006: In FIG. 1, the memory is used as an example to show the storage medium in the node, and a physical form of the memory may be a cache line. In a method in this application, in addition to being provided to a local instance (for example, a process) for use, the memory may be used by an instance of another node. A manner of being used by the instance of the another node is to write data into the memory or request to read data in the memory by using a request and the method described in this application.

An input/output memory management unit (Input/Output Memory Management Unit, IOMMU) 1007: Similar to a function of the MMU 1005, the IOMMU is responsible for translation of addresses of memory access requests of the hardware except the CPU. For example, if the hardware is a memory, the memory access request is used to request to write data into the memory or request to read data in the memory. The hardware except the CPU may be another device supporting direct memory access (Direct Memory Access, DMA).

A network device 1008: The network device 1008 is configured to connect the node to a high-performance interconnect bus, and functions as a network interface card. The network device 1008 may be an ECC NIC (namely, a network device having an ECC feature), for example, may be a bus endpoint, and may be also referred to as an endpoint (End Point, EP) for short. The bus endpoint is used as an example. The bus endpoint is usually a hardware module having an address translation function. Similar to a network, the bus endpoint also needs a driver to be installed in an operating system of the node, so that the operating system of the node can use the bus endpoint. One node may include a plurality of bus endpoints, which is exactly as a plurality of network interface cards may be installed in one node. One node may include both a bus endpoint and a network interface card. In FIG. 1, no network interface card is drawn, and only the bus endpoint is shown as an example. If remote communication of the node is all implemented through the high-performance interconnect bus, that is, information is exchanged by using memory semantics, the node may include only the bus endpoint. During actual cabling, the bus endpoint may have one end connected to the CPU, the memory, or the MMU, and other end connected to the high-performance bus or a switch of the high-performance bus.

In a scenario, the node 100 may include a plurality of network devices 1008, and all the plurality of network devices can access the memory 1006.

In an implementation, the bus endpoint may alternatively be integrated into another device (such as the CPU and the memory) related to data read/write in the node, functions as an interface or a communication module, and is packaged with the device.

In an implementation, functions of the IOMMU 1007 and the bus endpoint 1008 may be integrated into one chip for implementation, that is, are combined into one hardware device for deployment. At this time, it may also be considered that the bus endpoint has the function of the IOMMU.

A software module deployed on the same node with the hardware includes the following:
A bus endpoint driver (EP driver) 1002: indicates a software module that is in a kernel of the operating system (Operation System, OS) run in the node and that is configured to drive the bus endpoint that is a hardware module. The driver has a same function as a driver of other hardware to enable the operating system to sense and use corresponding hardware.

An agent (Agent) 1003: is configured to manage a shared memory in a local node and communicate with controller 1001. The agent 1003 and the controller 1001 may communicate with each other through the high-performance interconnect bus, or may communicate with each other through an Ethernet. In an implementation, the bus endpoint driver may also have a function that is in the agent that is of managing the shared memory in the local node. In other words, the foregoing two modules are merely schematic division from the perspective of functions.

A source end may perform a data write operation or a data read operation on a destination end. The source end may be the node described above, and the destination end may be the node described above. For example, the source end is a second node, the destination end is a first node, and the second node may send a request (for example, a write request or a read request) to the first node. Specifically, a processor or another control module of the second node may determine an operation that needs to be performed on a memory of the first node (for example, indicating a network device of the second node to perform a write operation or a read operation on the memory), and deliver information including the operation to a local network device of the second node. The local network device of the second node may transfer the request (for example, in a manner of sending a packet) to a network device of the first node. The network device of the first node may perform the read operation or the write operation on the memory based on the request, and return an execution result to the network device of the second node.

This application emphatically describes a process of how the first node performs an operation corresponding to the request after the first node receives the request sent by the second node, namely, a process of processing the request. It should be understood that, in the foregoing scenario, the second node is a source node (also referred to as the source end), and the first node is a destination node (also referred to as the destination end). In another scenario, the second node may be a destination node. In addition, because one node may communicate with a plurality of nodes or a plurality of devices in one node at the same time, the node may be both a source node and a destination node at the same time.

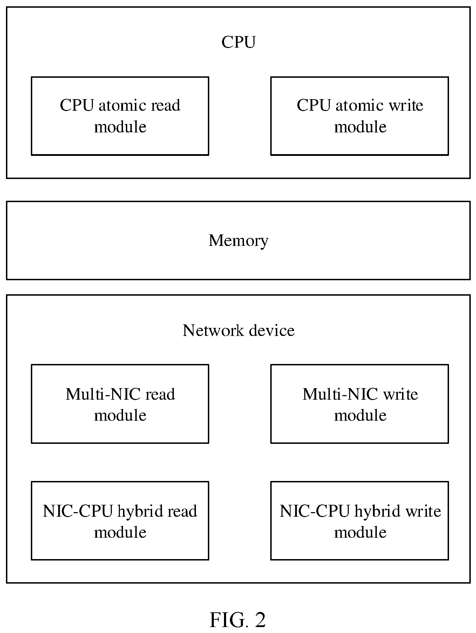

In some scenarios, one node may include a plurality of network devices, and the plurality of network devices may access a local memory. In addition, in this mode, the CPU cannot access the memory. In some scenarios, the plurality of network devices may access a local memory, and the local CPU may also access the memory. FIG. 2 is a more detailed diagram of the architecture to which this application is applicable. One node may include a plurality of network devices, and the plurality of network devices may access a local memory.

In terms of hardware, this framework may include a CPU. The CPU may have a plurality of cores, and a multi-core system complies with a cache coherence protocol when accessing a main memory. The framework may include a memory, namely, the main memory. The object mentioned in the present invention may be a memory in the main memory. The framework may include an ECC NIC, which is a network device having an ECC feature. Although one ECC NIC is shown in FIG. 2, a plurality of ECC NICs may be actually included.

From the perspective of software:
The CPU may include a CPU atomic read/write module, for example, may include a CPU atomic read module (CPU Atomic Read Module) and a CPU atomic write module (CPU Atomic Write Module) in FIG. 2. The module is specifically represented as code that can be run on the CPU, and defines behavior that the CPU should comply in an object coherence protocol of a heterogeneous system.

The ECC NIC may include a protocol parsing and execution module. Based on different access objects and different access modes supported by the memory, for example, the ECC NIC may include a multi-network-interface-card read module (Multi-NIC Read Module), a multi-network-interface-card write module (Multi-NIC Write Module), a network-interface-card-CPU hybrid read module (NIC-CPU Hybrid Read Module), and a network-interface-card-CPU hybrid write module (NIC-CPU Hybrid Write Module) in FIG. 2. The ECC NIC can define behavior of these operations in a programmable manner. The protocol parsing and execution module defines behavior that an ECC network device should comply in the object coherence protocol of the heterogeneous system. Differences in request processing by the foregoing modules are described in subsequent embodiments, and details are not described herein again.

In an existing implementation, for a same memory, only access of a plurality network devices is supported, or only access of a local CPU is supported. In addition, to implement atomic read or atomic write of the network device, information indicating whether a memory object is in a state in which data writing is performed and information indicating an updated latest version of data may be configured on a cache line (cache line) of the memory object. In other words, extra storage space is needed to store the foregoing information, which causes a waste of bandwidth. In addition, the CPU needs to perform a strip operation (in a process of reading data, the foregoing information is read; however, the information is not required by the source end; and therefore, a processor needs to strip the data and return data after stripping to the source end), and an extra time and calculation overheads are needed.

Specifically, in a process of performing a write operation, the source end needs to attempt to obtain a lock for a to-be-written object. Specifically, the source end needs to obtain information indicating whether the to-be-written object is in a state in which data writing is performed. If the information indicates that the to-be-written object is in the state in which data writing is performed, obtaining the lock fails, and a transaction is terminated. If obtaining the lock succeeds, the destination end may lock the to-be-written object. Then, the write operation is performed, and information indicating a latest modified version of the data is updated. It can be learned from the foregoing that one atomic write operation requires at least two round-trip times (round-trip times, RTTs), and a latency of the write operation is relatively high.

In embodiments of this application, in a mode in which only the network device is supported to access the memory, atomic read/write for the memory may be implemented without the information indicating whether the memory object is in the state in which data writing is performed and the information indicating the updated latest version of the data. In this way, a waste of bandwidth can be reduced. In addition, because the CPU does not need to perform a strip operation on the foregoing information, a time and calculation overheads are reduced.

In a possible implementation, the mode in which only the network device is supported to access the memory may be referred to as a mode 1: One or more network devices have a memory access capability (a Multi-NIC Mode).

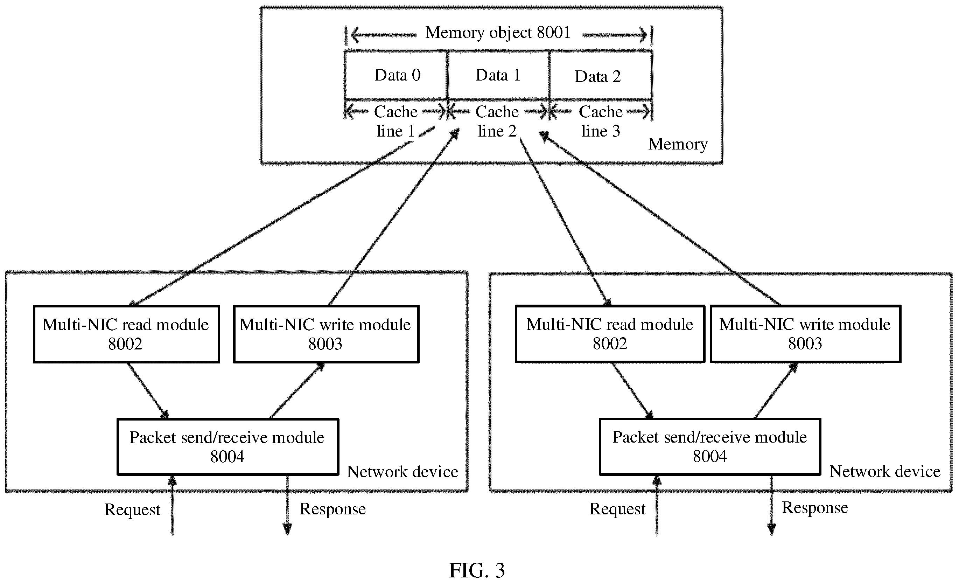

The mode 1 is a multi-network-device mode in the object coherence protocol of the heterogeneous system in a distributed environment, and a remote atomic object (a memory object) can be accessed. In this mode, only the ECC NIC is used for accessing the object, only one RTT is required, and concurrent operations of a plurality of network devices are supported. FIG. 3 is a diagram of a structure of components in the mode 1. The following modules and components may be specifically involved:
Memory (Memory): is specifically a memory of the destination end, namely, the memory of the first node, and stores a memory object that needs to be read and written by a remote atom.
Memory object: is an object to be operated by the remote atom, and may cross cache lines (cache lines). During implementation of the Multi-NIC Mode in the object coherence protocol of the heterogeneous system, the object does not need to indicate the information (for example, an existing header identifier) about whether the memory object is in the state in which data writing is performed, does not need to indicate the information (for example, an existing version) about the latest modified version, or the like. The foregoing information may be referred to as meta data, and the memory object may store only a valid data payload.

Network device ECC NIC: is a network device that supports the ECC feature at the destination end. In FIG. 3, two ECC NICs are used as an example. In an actual system, more such network devices may perform atomic read and write concurrently.

Multi-NIC Read Module (8002): is a module that supports a plurality of ECC NICs to perform atomic read concurrently in the Multi-NIC mode in the object coherence protocol of the heterogeneous system, and defines specific behavior of the ECC NIC when performing atomic read in this mode.

Multi-NIC Write Module (8003): is a module that supports a plurality of ECC NICs to perform atomic write concurrently in the Multi-NIC mode in the object coherence protocol of the heterogeneous system, and defines specific behavior of the ECC NIC when performing atomic write in this mode.

Packet Send/Receive Module (8004): is a module responsible for receiving a request packet and sending a reply packet in the ECC NIC. In this embodiment, after receiving the request packet, the module sends the request packet to the Multi-NIC Read module or the Multi-NIC Write module for processing. At the same time, data that needs to be returned from the Multi-NIC Read module or the Multi-NIC Write module to an initiating end is also transferred to the module, and is further sent to a network by the module.

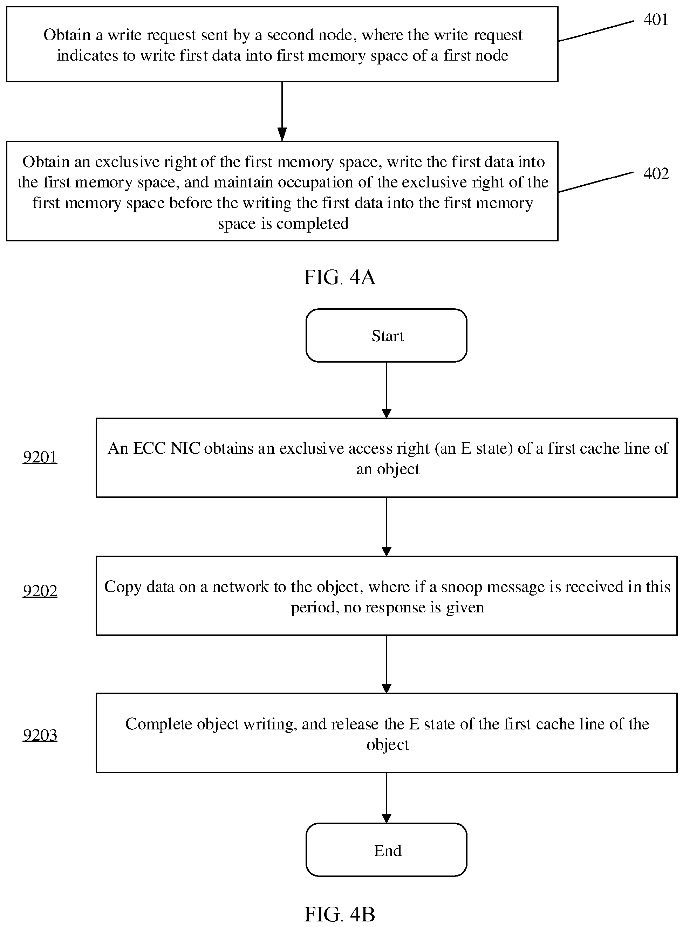

FIG. 4A is a schematic flowchart of a request processing method according to an embodiment of this application. As shown in FIG. 4A, the request processing method provided in this embodiment of this application includes the following steps.

401: Obtain a write request from a second node, where the write request indicates to write first data into first memory space of the first node.

Step 401 may be applied to a network device of the first node. The second node may transfer the write request to the network device of the first node, so that the network device of the first node may obtain the write request from the second node. It should be understood that a mechanism provided in this embodiment of this application may be applied to a scenario in which nodes in a cloud interact with each other, a scenario in which terminals interact with each other, and a scenario in which a terminal interacts with a cloud device. In other words, either of the two nodes may be a terminal, or a device that can initiate a memory access request or share a storage resource in a network, for example, a server.

The write request may indicate to write the first data into the first memory space in a memory of the first node. For example, the write request may include an address (a virtual address or a physical address, where the first memory space may be uniquely indicated based on the address) corresponding to the first memory space. For example, the address may include a start address and an address offset.

It should be understood that a relationship between the first memory space and second memory space is not limited in this embodiment of this application, and the first memory space may be different from or the same as the second memory space.

The first memory space may be a memory object (object). In other words, an address (one or more addresses) included in the write request may include an address corresponding to the memory object, and the memory object may include a plurality of cache lines (cache lines), for example, three cache lines in the memory shown in FIG. 3.

The following provides descriptions about the write request.

In a possible implementation, a processor and the network device of the first node need to perform some initialization actions. For example, the processor is a CPU, and the network device is an ECC NIC. Necessary initialization actions to be performed by the CPU and the ECC NIC may include: defining behavior of the ECC NIC when receiving an invalidate (invalidate) message in an object coherence protocol of a heterogeneous system, and parameters such as a retry interval (retry_interval) and a timeout (timeout) related to retry.

In an implementation, a processor that is of the second node and that serves as an initiating end may determine an operation (a write operation or a read operation for the memory of the first node) to be performed, and deliver a work request to a local network device.

The initiating end can specify a specific type of atomic read/write to be initiated on a remote object. There are four types of operations: Multi-NIC Mode Read, Multi-NIC Mode Write, NIC-CPU Hybrid Read, and NIC-CPU Hybrid Write. The Multi-NIC Mode Read and the Multi-NIC Mode Write support a read/write operation on a target object only by using an ECC NIC at a destination end, but not by using a CPU at the destination end at the same time. The NIC-CPU Hybrid Read and the NIC-CPU Hybrid Write supports a read/write operation on the target object by using both an ECC network device at the destination end and the CPU at the destination end.

The local network device (the network device of the first node) may receive the delivered request, and send a packet (carrying the write request) to a network device at the destination end (a network device of the second node).

For example, a CPU of the first node may deliver a work request to a local ECC NIC, and the ECC NIC parses the work request, encapsulates a packet, and sends the packet to the network device at the destination end (the network device of the second node) over a network. The network device at the destination end (the network device of the second node) parses the received request, and performs an operation based on the predefined behavior.

For example, a request end may deliver a multi-NIC read request or a multi-NIC write request to the local ECC NIC, and the local ECC NIC sends the multi-NIC read request or the multi-NIC write request to a peer NIC.

Typically, a work request sent by an initiating end to an ECC NIC includes but is not limited to the following fields:

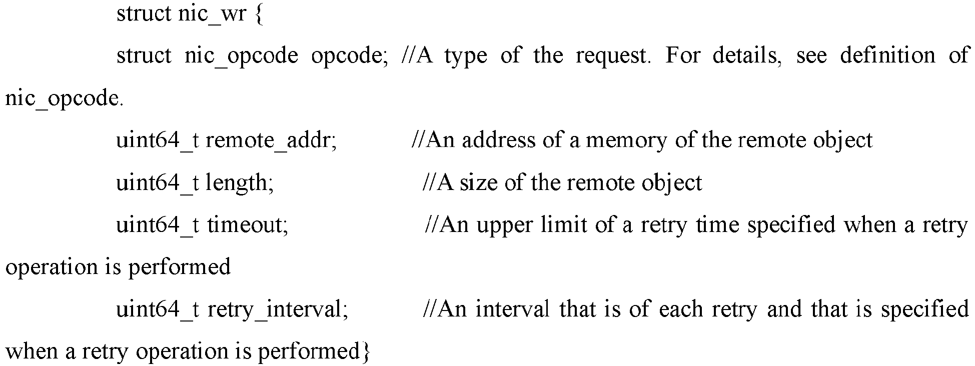

The definition of nic_opcode includes but is not limited to the following:
struct nic_opcode {
OBJ_MUL_NIC_RD,
OBJ_MUL_NIC_WR,
OBJ_CPU_NIC_RD,
OBJ_CPU_NIC_WR, }

In this embodiment, the initiating end may encapsulate information about the work request, specify a remote address (remote_addr) and a length (length) to be operated, and specify opcode as OBJ_MUL_NIC_RD or OBJ_MUL_NIC_WR, which respectively represent atomic read and write performed on the remote object, and then invoke a driver interface of the ECC NIC to deliver the work request. The local ECC NIC parses the work request, then encapsulate the packet, and sends the packet to the peer ECC NIC. The destination end receives the request packet, and sends, based on a request type, the request packet to different modules for execution. After receiving the packet, the ECC NIC at the destination end parses the packet. If the opcode is OBJ_MUL_NIC_RD, the packet is sent to a Multi-NIC Read Module for processing. If the opcode is OBJ_MUL_NIC_WR, the packet is sent to a Multi-NIC Write Module for processing.

402: Obtain an exclusive right of the first memory space, write the first data into the first memory space, and maintain occupation of the exclusive right of the first memory space before the writing the first data into the first memory space is completed.

In a possible implementation, in response to the write request of the first memory space, the network device of the second node may obtain the exclusive right of the first memory space.

In a possible implementation, the first memory space may be a memory object, the memory object may include a plurality of cache lines, and the network device of the second node may obtain an exclusive access right of a first cache line of the memory object to further obtain an exclusive right of an entire memory object.

In a possible implementation, the first memory space may be a memory object. When performing a write operation on the memory object, the network device of the second node may obtain an exclusive right of the memory object. The exclusive right may be an E state specified in the object coherence protocol of the heterogeneous system. The E state may indicate that no other cache has a copy of data, the copy of the data in the memory is also the latest, and data is directly returned for a read operation. After obtaining the exclusive right of the memory object, the second node may continuously write the first data into the memory object. With reference to FIG. 4B, to ensure atomicity of writing data, in a process of writing data, a snoop message of another network device may not be responded. The snoop message may indicate to obtain the exclusive right of the memory object. In other words, in the process of writing the data, the second node does not release the exclusive right for the memory object, so that the another network device does not have a permission to perform a write operation on the memory object, thereby ensuring atomicity of the write operation. In addition, because the exclusive right of the first memory space is not released before writing the first data into the first memory space is completed, atomicity of the write operation can be implemented without storing information indicating a state of whether data writing is performed on the memory object, thereby reducing a waste of bandwidth. In addition, because the CPU does not need to perform a strip operation on the foregoing information, a time and calculation overheads are reduced.

In a possible implementation, the first memory space does not include a location used to store an indication of whether the first memory space is in a state in which data writing is performed by the network device of the first node.

In a possible implementation, after the write operation of the first data is completed, the network device of the second node may release an exclusive access right of the memory object, so that the another network device can obtain the exclusive right of the memory object when performing a write operation on the memory object.

In a possible implementation, after completing the write operation indicated by the write request, the network device of the second node may return an execution result to the first node (for example, return the execution result to the network device of the first node). The execution result may indicate that execution succeeds or fails.

In a possible implementation, the network device of the second node may further receive a read request sent by the second node. The read request indicates to read data from the second memory space of the first node.

The read request may indicate to read the data from the second memory space in the memory of the first node. For example, the read request may include an address (a virtual address or a physical address, where the second memory space may be uniquely indicated based on the address) corresponding to the second memory space. For example, the address may include a start address and an address offset.

The second memory space may be a memory object (object). In other words, an address (one or more addresses) included in the read request may include an address corresponding to the memory object, and the memory object may include a plurality of cache lines (cache lines), for example, three cache lines in the memory shown in FIG. 3.

In a possible implementation, in response to the read request, the network device of the second node may obtain a shared access right of the second memory space and read the data from the second memory space.

In a possible implementation, the first memory space may be a memory object, the memory object may include a plurality of cache lines, and the network device of the second node may obtain a shared access right of a first cache line of the memory object to further obtain a shared access right of an entire memory object. The shared access right may be an S state specified in the object coherence protocol of the heterogeneous system. The shared access right indicates that data of the memory object is the latest, and another cache has a copy of the data.

In a possible implementation, if a shared access right of the memory object can be obtained, it indicates that the memory object is not in a state in which data writing is performed by the another network device, and the data can be read.

In a possible implementation, in a process of reading the data from the second memory space, it is sensed that the second memory space is in a state in which data writing is performed by another network device of the first node, and the process of reading the data from the second memory space is terminated; and the data is re-read from the second memory space based on the re-obtained shared access right of the second memory space. If the data is written into the memory object in the data read process, the read data is not the latest data. In this case, the network device of the second node senses that the memory object is in an invalid state, and the data read process needs to be interrupted and a waiting state is entered. After a preset time, the shared access right of the memory object may be re-obtained. For example, if the shared access right of the memory object is re-obtained after the preset time, it indicates that the memory object is not in a state in which data writing is performed, and the data can be read again.

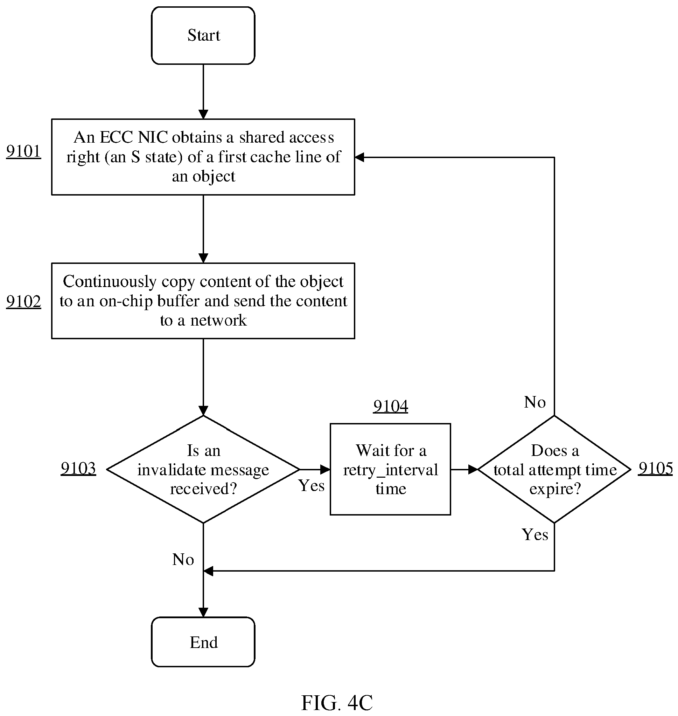

With reference to FIG. 4C, an example in which the network device is an ECC NIC is used. The ECC NIC at the destination end (namely, the network device of the second node) may attempt to obtain an S state of a first cache line of an object based on an address of the memory object, and then continuously copy content of the object to an on-chip buffer and send the content to the network. If the ECC NIC receives the invalidate message in this process, it indicates that another ECC NIC starts to write the object. In this case, read object data may be dirty data, and an object read operation is interrupted first. Based on the retry_interval parameter configured during initialization, after a retry_interval, if a total retry time exceeds a timeout value configured during initialization, a Packet Send/Receive Module (8004) replies an operation failure to the initiating end. Otherwise, the retry continues until reading the object finally succeeds or times out.

In the foregoing embodiment, a multi-network-device write mode in the object coherence protocol of the heterogeneous system is implemented. In this solution, an atomic operation on the remote object may be performed, and no lock mechanism or version number mechanism (that is, information indicating a write status and a latest version is stored in the memory) is required for control, thereby reducing a waste of bandwidth and saving computing power of the CPU. In addition, only one network round trip is required in the entire process, thereby significantly reducing a delay of the atomic operation on the remote object and improving efficiency of the atomic operation.

In an existing implementation, for a same memory, only access of a plurality network devices is supported, or only access of a local CPU is supported. In embodiments of this application, the memory access mode that supports both the network device and the processor is constructed. In this mode, both the network device and the CPU can access the same memory and implement atomic read/write on the memory.

In a possible implementation, the mode in which both the network device and the processor support access to the memory may be referred to as a mode 2: The network device and the processor have a memory access capability (a Multi-NIC Mode).

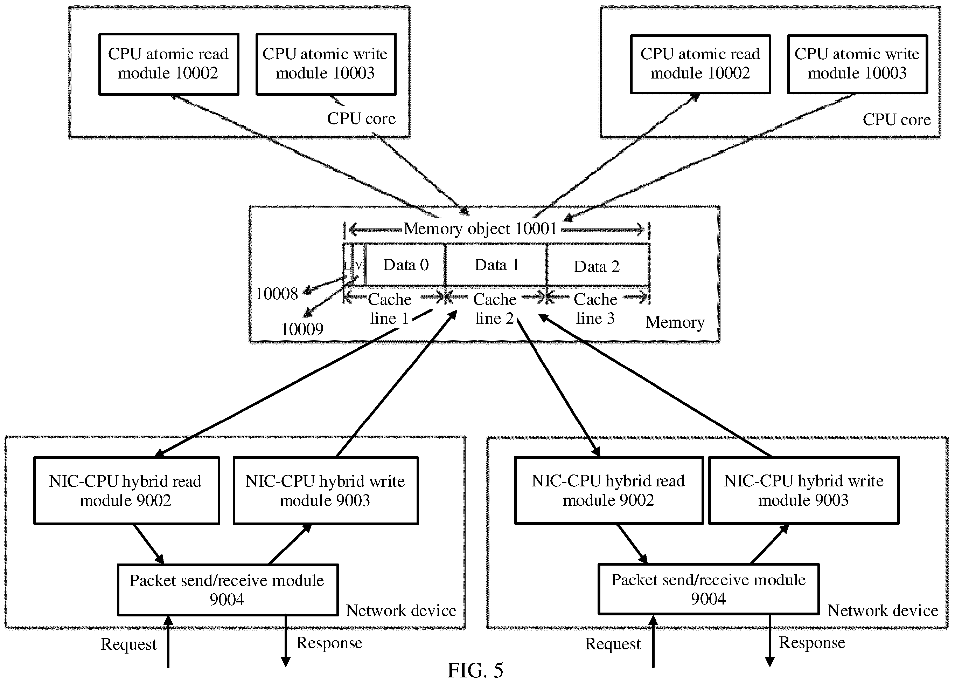

The mode 2 is a network device-CPU hybrid mode in the object coherence protocol of the heterogeneous system in a distributed environment, and a remote atomic object (a memory object) can be accessed. In this mode, a plurality of NICs and a plurality of CPU cores perform atomic read/write concurrently. FIG. 5 is a diagram of a structure of components in the mode 2. The following modules and components may be specifically involved:
Memory (Memory): is specifically a memory of the destination end, namely, the memory of the first node, and stores a memory object that needs to be read and written by a remote atom.
Memory object: is an object to be operated by the remote atom, and may cross cache lines (cache lines). During implementation of the NIC-CPU Hybrid Mode in the object coherence protocol of the heterogeneous system, a Lock (10008) field and a Version (10009) field are added to a preset location of the memory object as meta data. This is necessary to support concurrent atomic reads/writes for the CPUs and the NICs.

CPU core: is a CPU processing core at the destination end. In the NIC-CPU Hybrid Mode, the CPU cores and the NICs also participate in atomic read/write on the object. In FIG. 5, two CPU cores are used as an example. In an actual system, more CPU cores may participate in this process.

CPU Atomic Read Module (10002): is a module that performs concurrent atomic reads on the CPU side in the NIC-CPU Hybrid mode in the object coherence protocol of the heterogeneous system, and defines specific behavior of the CPU core when performing atomic read in this mode.

CPU Atomic Write Module (10003): is a module that performs concurrent atomic writes on the CPU side in the NIC-CPU Hybrid mode in the object coherence protocol of the heterogeneous system, and defines specific behavior of the CPU core when performing atomic write in this mode.

ECC NIC: is a network device that supports the ECC feature at the destination end. In FIG. 5, two ECC NICs are used as an example. In an actual system, more such network devices may participate in this process.

NIC-CPU Hybrid Read Module (10004): is a module that performs concurrent atomic reads on the ECC NIC side in the NIC-CPU Hybrid mode in the object coherence protocol of the heterogeneous system, and defines specific behavior of the ECC NIC when performing atomic read in this mode.

NIC-CPU Hybrid Write Module (10005): is a module that performs concurrent atomic writes on the ECC NIC side in the NIC-CPU Hybrid mode in the object coherence protocol of the heterogeneous system, and defines specific behavior of the ECC NIC when performing atomic write in this mode.

Packet Send/Receive Module (10006): is a module that is in the ECC NIC and that is responsible for receiving a request packet and sending a reply packet. In this embodiment, after receiving the request packet, this module sends the request packet to the NIC-CPU Hybrid Read Module (10004) or the NIC-CPU Hybrid Write Module (10005) for processing. In addition, the NIC-CPU Hybrid Read Module (10004) or the NIC-CPU Hybrid Write Module (10005) needs to transfer, to this module, data returned to the initiating end, and then this module sends the data to the network.

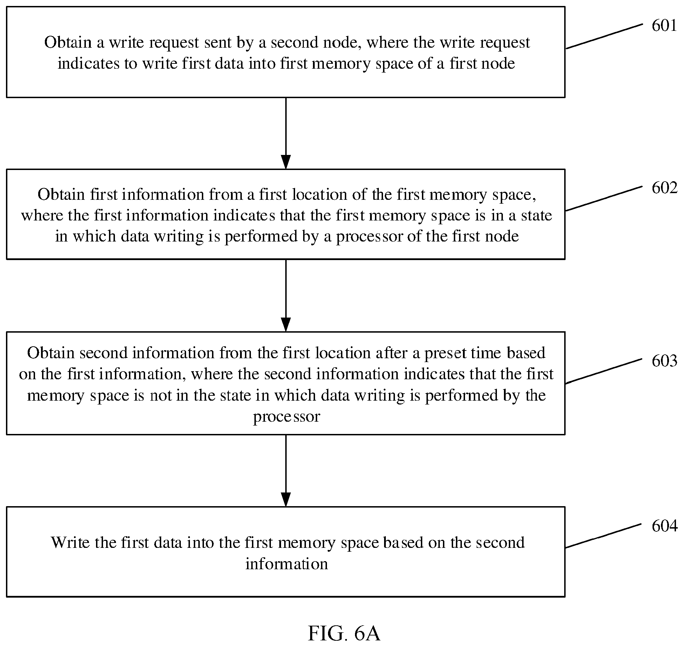

FIG. 6A is a schematic flowchart of a request processing method according to an embodiment of this application. As shown in FIG. 6A, the request processing method provided in this embodiment of this application includes the following steps.

601: Obtain a write request from a second node, where the write request indicates to write first data into first memory space of the first node.

Step 601 may be applied to a network device of the first node. The second node may transfer the write request to the network device of the first node, so that the network device of the first node may obtain the write request from the second node. It should be understood that a mechanism provided in this embodiment of this application may be applied to a scenario in which nodes in a cloud interact with each other, a scenario in which terminals interact with each other, and a scenario in which a terminal interacts with a cloud device. In other words, either of the two nodes may be a terminal, or a device, for example, a server that can initiate a memory access request or share a storage resource in a network.

The write request may indicate to write the first data into the first memory space in a memory of the first node. For example, the write request may include an address (a virtual address or a physical address, where the first memory space may be uniquely indicated based on the address) corresponding to the first memory space. For example, the address may include a start address and an address offset.

The first memory space may be a memory object (object). In other words, an address (one or more addresses) included in the write request may include an address corresponding to the memory object, and the memory object may include a plurality of cache lines (cache lines), for example, three cache lines in the memory shown in FIG. 3.

The following describes the write request.

In a possible implementation, a processor and the network device of the first node need to perform some initialization actions. For example, the processor is a CPU, and the network device is an ECC NIC. Necessary initialization actions to be performed by the CPU and the ECC NIC may include: defining behavior of the ECC NIC when receiving an invalidate (invalidate) message in an object coherence protocol of a heterogeneous system, and parameters such as a retry interval (retry_interval) and a timeout (timeout) related to retry.

In an implementation, a processor that is of the second node and that serves as an initiating end may determine an operation (a write operation or a read operation for the memory of the first node) to be performed, and deliver a work request to the local network device.

The initiating end can specify a specific type of atomic read/write to be initiated on a remote object. There are four types of operations: Multi-NIC Mode Read, Multi-NIC Mode Write, NIC-CPU Hybrid Read, and NIC-CPU Hybrid Write. The Multi-NIC Mode Read and the Multi-NIC Mode Write support a read/write operation on a target object only by using an ECC NIC at a destination end, but not by using a CPU at the destination end at the same time. The NIC-CPU Hybrid Read and the NIC-CPU Hybrid Write supports a read/write operation on the target object by using both an ECC network device at the destination end and the CPU at the destination end.

The local network device (the network device of the first node) may receive the delivered request, and send a packet (carrying the write request) to a network device at the destination end (a network device of the second node).

For example, a CPU of the first node may deliver a work request to a local ECC NIC, and the ECC NIC parses the work request, encapsulates a packet, and sends the packet to the network device at the destination end (the network device of the second node) through a network. The network device at the destination end (the network device of the second node) parses the received request, and performs an operation based on the predefined behavior.

For example, a request end may deliver a NIC-CPU hybrid read request or a NIC-CPU hybrid write request to the local ECC NIC, and the local ECC NIC sends the NIC-CPU hybrid read request or the NIC-CPU hybrid write request to a peer NIC. After receiving the packet, the ECC NIC at the destination end parses the packet. If opcode is OBJ_CPU_NIC_RD, the packet is sent to the NIC-CPU hybrid read module (10004) for processing. If opcode is OBJ_CPU_NIC_WR, the packet is sent to the NIC-CPU hybrid write module (10005) for processing.

602: Obtain first information from a first location of the first memory space, where the first information indicates that the first memory space is in a state in which data writing is performed by the processor of the first node.

In a possible implementation, in response to the write request of the first memory space, the network device of the second node may obtain an exclusive right of the first memory space and obtain the first information from the first location of the first memory space. The information at the first location may indicate whether the first memory space is in the state in which data writing is performed by the processor of the first node.

For example, before the network device of the second node obtains the first information from the first location of the first memory space, the CPU may perform a write operation on the first memory space, and set the information at the first location to indicate that the first memory space is in the state in which data writing is performed by the processor of the first node.

The first memory space is a memory object (object), the memory object includes a plurality of cache lines (cache lines), and the first location is at a header location of a header cache line in the plurality of cache lines. For example, the first information may be stored by using a preset quantity of first bytes of the header cache line, for example, first 8 bytes or first 16 bytes.

603: Obtain second information from the first location after a preset time based on the first information, where the second information indicates that the first memory space is not in the state in which data writing is performed by the processor.

The information at the first location may indicate, by using different identifiers, whether the first memory space is in the state in which data writing is performed by the processor of the first node. For example, "1" may indicate that the first memory space is in the state in which data writing is performed by the processor of the first node, and "0" may indicate that the first memory space is not in the state in which data writing is performed by the processor of the first node.

In a possible implementation, if the first information indicates that the first memory space is in the state in which data writing is performed by the processor of the first node, the information at the first location (the second information) may be re-obtained after a period of time, to ensure atomicity of the write operation.

In a possible implementation, after it is determined that the first information indicates that the first memory space is in the state in which data writing is performed by the processor of the first node, the exclusive right for the first memory space may be released.

In a possible implementation, after it is determined that the first information indicates that the first memory space is in the state in which data writing is performed by the processor of the first node, the information at the first location (the second information) may be re-obtained after the preset time, and the exclusive right of the first memory space may be re-obtained.

In a possible implementation, if a time during the retry exceeds a preset timeout value, a failure is returned.

604: Write the first data into the first memory space based on the second information.

In a possible implementation, the first data is written into the first memory space based on the second information indicating that the first memory space is not in the state in which data writing is performed by the processor.

In a possible implementation, after a write operation of the first data is completed, the network device of the second node may release an exclusive access right of the memory object, so that another network device can obtain the exclusive right of the memory object when performing a write operation on the memory object.

In a possible implementation, after completing the write operation indicated by the write request, the network device of the second node may return an execution result to the first node (for example, return the execution result to the network device of the first node). The execution result may indicate that execution succeeds or fails.

In a possible implementation, the network device of the second node may further receive a read request sent by the second node. The read request indicates to read data from second memory space of the first node.

The read request may indicate to read the data from the second memory space in the memory of the first node. For example, the read request may include an address (a virtual address or a physical address, where the second memory space may be uniquely indicated based on the address) corresponding to the second memory space. For example, the address may include a start address and an address offset.

The second memory space may be a memory object (object). In other words, an address (one or more addresses) included in the read request may include an address corresponding to the memory object, and the memory object may include a plurality of cache lines (cache lines), for example, three cache lines in the memory shown in FIG. 3.

In a possible implementation, in response to the read request, the network device of the second node may obtain a shared access right of the second memory space and read the data from the second memory space.

In a possible implementation, the first memory space may be a memory object, the memory object may include a plurality of cache lines, and the network device of the second node may obtain a shared access right of a first cache line of the memory object to further obtain a shared access right of an entire memory object. The shared access right may be an S state specified in the object coherence protocol of the heterogeneous system. The shared access right indicates that data of the memory object is the latest, and another cache has a copy of the data.

In a possible implementation, if a shared access right of the memory object can be obtained, it indicates that the memory object is not in a state in which data writing is performed by the another network device, and the data can be read.

In a possible implementation, in a process of reading the data from the second memory space, it is sensed that the second memory space is in a state in which data writing is performed by another network device of the first node, and the process of reading the data from the second memory space is terminated; and the data is re-read from the second memory space based on the re-obtained shared access right of the second memory space. If the data is written into the memory object in the data read process, the read data is not the latest data. In this case, the network device of the second node senses that the memory object is in an invalid state, and the data read process needs to be interrupted and a waiting state is entered. After the preset time, the shared access right of the memory object may be re-obtained. For example, if the shared access right of the memory object is re-obtained after the preset time, it indicates that the memory object is not in a state in which data writing is performed, and the data can be read again.

In a possible implementation, before the data is read from the second memory space, third information is obtained from a second location of the first memory space, where the information at the second location indicates a latest version of the data in the first memory space; after the data is read from the second memory space, fourth information is obtained from the second location; and when the fourth information is inconsistent with the third information, read failure information is returned to the second node.

The information at the second location may indicate the latest version of the data in the first memory space. When the fourth information is inconsistent with the third information, it may be considered that, in the process of reading the data from the second memory space, the processor performs a data write operation on the second memory space, and it may be further considered that the read data is invalid. In the foregoing manner, atomic read of the data can be ensured.

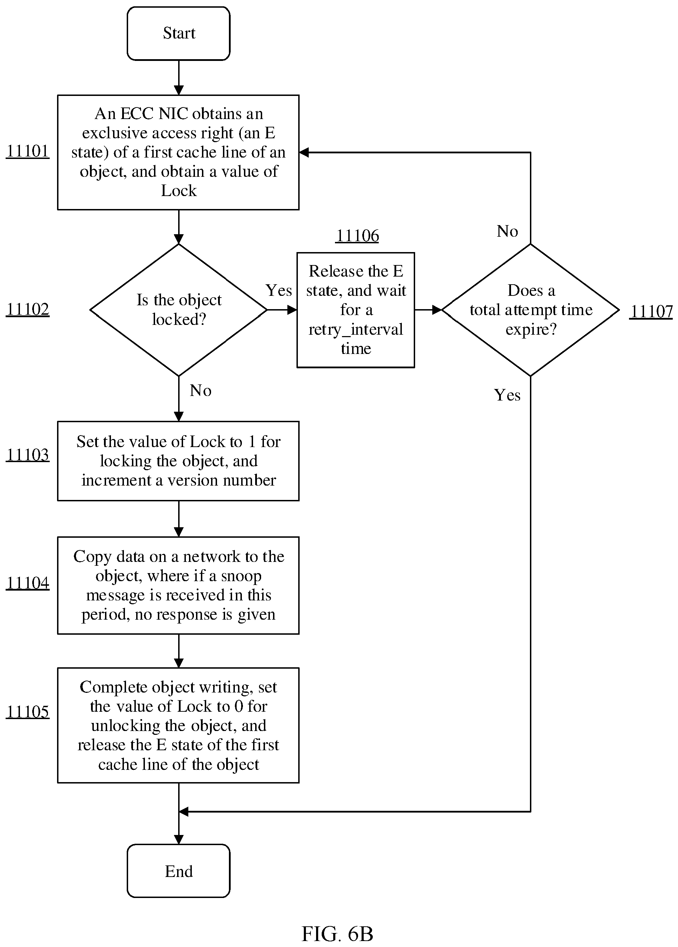

An example in which the network device is an ECC NIC is used. With reference to FIG. 6B, the ECC NIC obtains an exclusive access right (an E state) of a first cache line, and reads a value of Lock of the first cache line. If the value is 1, it indicates that the CPU locks the object and then the CPU performs a write operation on the object. In this case, the E state is released, and retry (including obtaining the E state) is performed after a retry_interval. If a time during the retry exceeds a timeout value, a failure is returned. If it is found that the object is not locked after the value of Lock is read, the value of Lock is set to 1, a version number is incremented, and data on the network starts to be copied to the object. If a snoop message is received in this period, no response is given. After writing the object is complete, the value of Lock is set to 0 for unlocking and the E state of the first cache line of the object is released. In this way, an atomic write operation performed by the ECC NIC in a NIC-CPU Hybrid Mode is completed.

In the foregoing manner, both the network device and the CPU can access a same memory and implement an atomic write operation on the memory, thereby improving flexibility, concurrency, and efficiency of an atomic operation on a remote object.

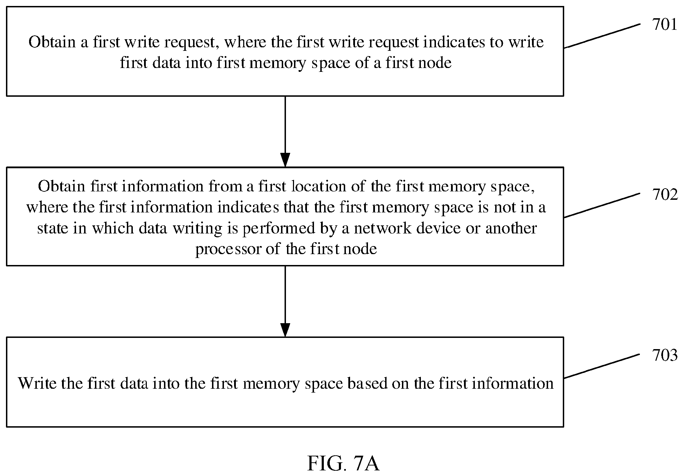

FIG. 7A is a schematic flowchart of a request processing method according to an embodiment of this application. As shown in FIG. 7A, the request processing method provided in this embodiment of this application includes the following steps.

701: Obtain a first write request, where the first write request indicates to write first data into first memory space of the first node.

Step 701 may be applied to a processor of the first node.

An instance at a source end (namely, the first node) runs the first request, and obtains a result after the first request is run. The first request may indicate to write the first data into the first memory space of the first node.

The write request may indicate to write the first data into the first memory space in a memory of the first node. For example, the write request may include an address (a virtual address or a physical address, where the first memory space may be uniquely indicated based on the address) corresponding to the first memory space. For example, the address may include a start address and an address offset.

The first memory space may be a memory object (object). In other words, an address (one or more addresses) included in the write request may include an address corresponding to the memory object, and the memory object may include a plurality of cache lines (cache lines), for example, three cache lines in the memory shown in FIG. 3.

702: Obtain first information from a first location of the first memory space, where the first information indicates that the first memory space is not in a state in which data writing is performed by a network device or another processor of the first node.

In a possible implementation, in response to the write request of the first memory space, a network device of a second node may obtain an exclusive right of the first memory space and obtain the first information from the first location of the first memory space. The information at the first location may indicate whether the first memory space is in a state in which data writing is performed by the processor of the first node.

For example, before an execution body (a CPU) of step 701 and step 702 obtains the first information from the first location of the first memory space, the network device or another CPU of the second node may perform a write operation on the first memory space, and set the information at the first location to indicate that the first memory space is in a state in which data writing is performed by the network device or the another CPU of the second node.

The first memory space is a memory object (object), the memory object includes a plurality of cache lines (cache lines), and the first location is at a header location of a header cache line in the plurality of cache lines. For example, the first information may be stored by using a preset quantity of first bytes of the header cache line, for example, first 8 bytes or first 16 bytes.

703: Write the first data into the first memory space based on the first information.

The information at the first location may indicate, by using different identifiers, whether the first memory space is in the state in which data writing is performed by the network device or the another processor of the first node. For example, "1" may indicate that the first memory space is in the state in which data writing is performed by the network device or the another processor of the first node, and "0" may indicate that the first memory space is not in the state in which data writing is performed by the network device or the another processor of the first node.

In a possible implementation, after the first information indicates that the first memory space is not in the state in which data writing is performed by the network device or the another processor of the first node, the processor may write the first data into the first memory space.

In a possible implementation, a second write request sent by the second node is obtained, where the second write request indicates to write second data into second memory space of the first node; second information is obtained from a first location of the second memory space; and when the second information indicates that the second memory space is in the state in which data writing is performed by the network device or the another processor of the first node, data write failure information is returned to the second node. After it is determined that the second memory space is in the state in which data writing is performed, it is directly determined that writing fails. Therefore, this can avoid that a CPU is blocked for an excessively long period of time because the network device is in the state in which data writing is performed for an excessively long period of time.

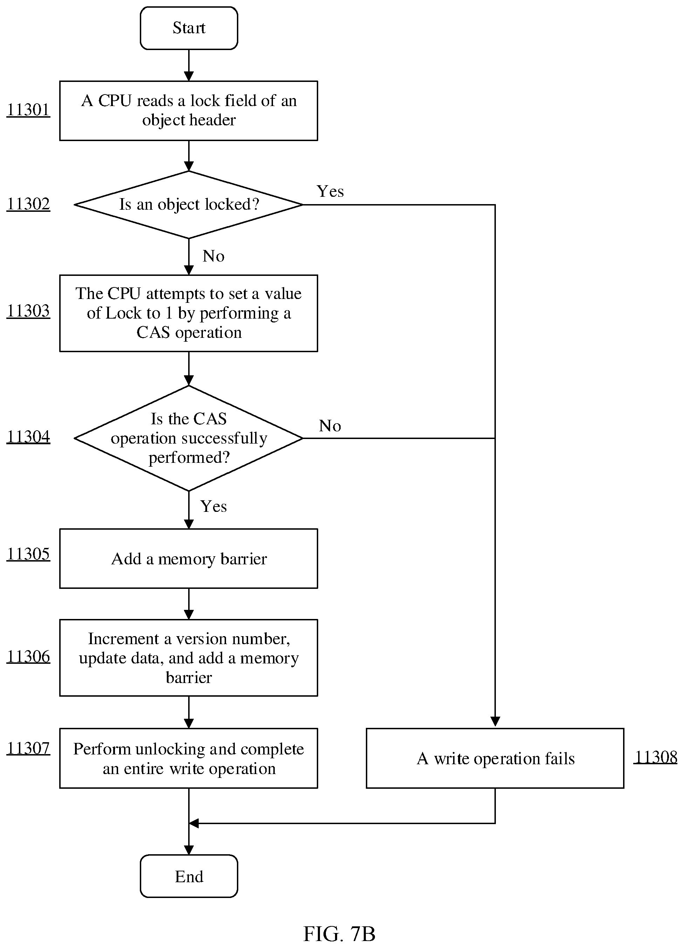

With reference to FIG. 7B, an example in which the network device is an ECC NIC is used. The CPU may read the information at the first location. If the information at the first location indicates that the first memory space is in a state in which data writing is performed (for example, 0), a failure may be returned to a user. This can avoid a case in which a CPU blocking time is excessively long because the ECC NIC occupies an E state for a long period of time. The CPU may attempt to set the information at the first location to 1 by performing a CAS operation. If the CAS operation fails, returning is aborted. Otherwise, a memory barrier is added, a version number is incremented, data is updated, and a memory barrier is added again. Finally, a value of Lock is set to 0 by performing the CAS operation for unlocking, to complete an entire write operation.

In a possible implementation, a read request is obtained from the second node, where the read request indicates to read data from the second memory space of the first node; after the data is read from the second memory space based on the read request, third information is obtained from a second location of the second memory space; and when the third information indicates that the second memory space is in the state in which data writing is performed by the network device or the another processor of the first node, data write failure information is returned to the second node.

In a possible implementation, a read request is obtained from the second node, where the read request indicates to read data from the second memory space of the first node; fourth information is obtained from a second location of the second memory space, where the information at the second location indicates a latest version of the data in the second memory space; after the data is read from the second memory space based on the read request, fifth information is obtained from the second location; and when the fourth information is inconsistent with the fifth information, read failure information is returned to the second node.

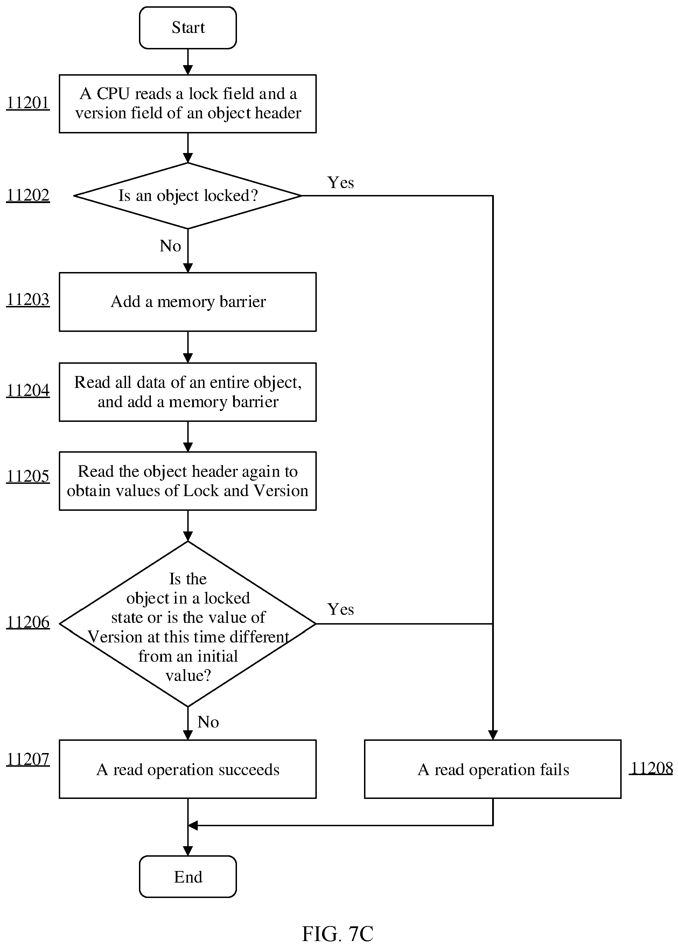

For example, with reference to FIG. 7C, the CPU may read values of Lock and Version of a memory object header. If the value of Lock is 1, reading fails and exits. Otherwise, a memory barrier is added, an entire object is read, and then a memory barrier is added again. Then, the object header is read again, and the values of Lock and Version are obtained again. If it is found that the object is in a locked state at this time or the value of Version at this time is different from an initially read value of Version, the read operation fails. Otherwise, the read operation succeeds. The CPU reads the object in a lock-free read mode. Lock and Version are used to determine whether the object is complete. Herein, no retry to be performed after the failure is to give a user more autonomy, so that the user can choose to initiate a retry or give up the retry.

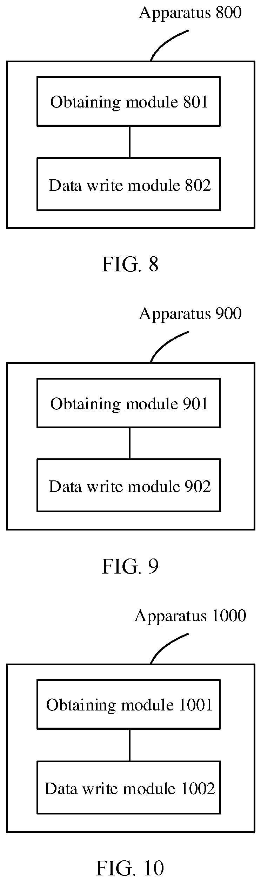

FIG. 8 is a diagram of a structure of a request processing apparatus according to an embodiment of this application. As shown in FIG. 8, the apparatus 800 may be located in a network device of a first node, and the apparatus 800 includes an obtaining module 801 and a data write module 802.

The obtaining module 801 is configured to: obtain a write request from a second node, where the write request indicates to write first data into first memory space of the first node;
read first information from a first location of the first memory space, where the first information indicates that the first memory space is in a state in which data writing is performed by a processor of the first node; and
obtain second information from the first location after a preset time based on the first information, where the second information indicates that the first memory space is not in the state in which data writing is performed by the processor.

For the description of the obtaining module 801, refer to the description of step 701 to step 703 in the foregoing embodiment. Details are not described herein again.

The data write module 802 is configured to write the first data into the first memory space based on the second information.

For the description of the data write module 802, refer to the description of step 704 in the foregoing embodiment. Details are not described herein again.

In a possible implementation, the first memory space is a memory object (object), the memory object includes a plurality of cache lines (cache lines), and the first location is at a header location of a header cache line in the plurality of cache lines.

In a possible implementation, the obtaining module is further configured to: obtain an exclusive (exclusive) right of the first memory space before writing the first data into the first memory space; and maintain occupation of the exclusive right of the first memory space before writing the first data into the first memory space is completed.

In a possible implementation, the obtaining module is further configured to:
before obtaining the first information from a first location of the first memory space, obtain the exclusive right of the first memory space.

The apparatus further includes:
a release module, configured to release the exclusive right of the first memory space based on the first information indicating that the first memory space is in the state in which data writing is performed by the processor of the first node.

In a possible implementation, the obtaining module is further configured to:
obtain a read request from the second node, where the read request indicates to read data from second memory space of the first node.

The apparatus further includes:
a data read module, configured to: after obtaining a shared (shared) access right of the second memory space, read the data from the second memory space of the first node.

In a possible implementation, the data read module is specifically configured to:
in a process of reading the data from the second memory space based on the read request, sense that the second memory space is in a state in which data writing is performed by another network device of the first node, and terminate the process of reading the data from the second memory space; and
re-read the data from the second memory space based on the re-obtained shared access right of the second memory space.

In a possible implementation, the obtaining module is further configured to:
before reading the data from the second memory space, obtain third information from a second location of the first memory space, where the information at the second location indicates a latest version of the data in the first memory space; and
after reading the data from the second memory space, obtain fourth information from the second location.

The apparatus further includes:
a data returning module, configured to: when the fourth information is inconsistent with the third information, return read failure information to the second node.

FIG. 9 is a diagram of a structure of a request processing apparatus according to an embodiment of this application. The apparatus is located in a processor of a first node, and the apparatus 900 may include an obtaining module 901 and a data write module 902.

The obtaining module 901 is configured to: obtain a first write request, where the first write request indicates to write first data into first memory space of the first node; and
obtain first information from a first location of the first memory space, where the first information indicates that the first memory space is not in a state in which data writing is performed by a network device or another processor of the first node.

For the description of the obtaining module 901, refer to the description of step 601 and step 602 in the foregoing embodiment. Details are not described herein again.

The data write module 902 is configured to write the first data into the first memory space based on the first information.

For the description of the data write module 902, refer to the description of step 603 in the foregoing embodiment. Details are not described herein again.

In a possible implementation, the first memory space is a memory object, the memory object includes a plurality of cache lines, and the first location is at a header location of a header cache line in the plurality of cache lines.

In a possible implementation, the obtaining module is further configured to:
obtain a second write request, where the second write request indicates to write second data into second memory space of the first node; and
obtain second information from a first location of the second memory space, where the second information indicates that the second memory space is in the state in which data writing is performed by the network device or the another processor of the first node.

The apparatus further includes:
a data returning module, configured to return data write failure information to the second node based on the second information.

In a possible implementation, the obtaining module is further configured to:
obtain a read request, where the read request indicates to read data from the second memory space of the first node; and
after reading the data from the second memory space based on the read request, obtain third information from a second location of the second memory space, where the third information indicates that the second memory space is in the state in which data writing is performed by the network device or the another processor of the first node.

The apparatus further includes:
a data returning module, configured to determine, based on the third information, that data writing fails.

In a possible implementation, the obtaining module is further configured to:
obtain a read request, where the read request indicates to read data from the second memory space of the first node;
obtain fourth information from a second location of the second memory space, where the information at the second location indicates a latest version of the data in the second memory space; and
after reading the data from the second memory space based on the read request, obtain fifth information from the second location.

The apparatus further includes:
a data returning module, configured to: when the fourth information is inconsistent with the fifth information, determine that reading fails.

FIG. 10 is a diagram of a structure of a request processing apparatus according to an embodiment of this application. The apparatus is located in a network device of a first node, and the apparatus 1000 includes an obtaining module 1001 and a data write module 1002.

The obtaining module 1001 is configured to: obtain a write request from a second node, where the write request indicates to write first data into first memory space of the first node; and obtain an exclusive right of the first memory space.

For the description of the obtaining module 1001, refer to the description of step 401 and step 402 in the foregoing embodiment. Details are not described herein again.

The data write module 1002 is configured to: write the first data into the first memory space; and maintain occupation of the exclusive right of the first memory space before writing the first data into the first memory space is completed.

For the description of the data write module 1002, refer to the description of step 403 in the foregoing embodiment. Details are not described herein again.

In a possible implementation, the first memory space does not include a location used to store an indication of whether the first memory space is in a state in which data writing is performed by the network device of the first node.

In a possible implementation, the obtaining module is further configured to:
obtain a read request from the second node, where the read request indicates to read data from second memory space of the first node; and
obtain a shared access right of the second memory space.

A data read module is configured to read the data from the second memory space.

In a possible implementation, the data read module is specifically configured to:
in a process of reading the data from the second memory space, sense that the second memory space is in a state in which data writing is performed by another network device of the first node, and terminate the process of reading the data from the second memory space; and
re-read the data from the second memory space based on the re-obtained shared access right of the second memory space.

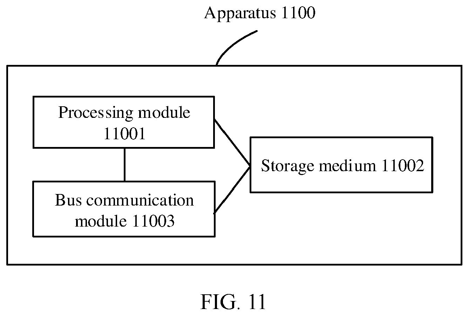

FIG. 11 is a diagram of a possible logical structure of a request processing device according to an embodiment of this application. The device 1100 includes a storage medium 11001, a processing circuit 11002, a memory management unit 11003, and a network device 11004. The storage medium 11001 is coupled to the processing circuit 11002. The storage medium 11001 is configured to store computer program code and data. The computer program code includes computer instructions. When the computer instructions are executed by the processing circuit 11002, the processing circuit 11002, the memory management unit 11003, and the network device 11004 may together perform the foregoing method. The processing circuit 11002 is configured to control and manage an action of the computer device 1100. The network device 11004 is configured to support the device 1100 in communicating with another device through a bus (for example, a high-performance interconnect bus).

The processing circuit 11002 may be a central processing unit, a graphics processing unit, a general-purpose processor, a digital signal processor, an application-specific integrated circuit, a field programmable gate array or another programmable logic device, a transistor logic device, a hardware component, or any combination thereof. The processing circuit 11002 may implement or execute various example logical blocks, modules, and circuits described with reference to content disclosed in this application. Alternatively, the processing circuit 11002 may be a combination of processors implementing a computing function, for example, a combination of one or more microprocessors, or a combination of a digital signal processor and a microprocessor. The storage medium 11001 may be a read-only memory (read-only memory, ROM) or another type of storage module that can store static information and instructions, or a random access memory (random access memory, RAM) or another type of storage module that can dynamically store information and instructions, or may be an electrically erasable programmable read-only memory (electrically erasable programmable read-only memory, EEPROM) or another magnetic storage device.

The storage medium 11001, the processing circuit 11002, and the network device 11004 may be connected through a bus. As shown in FIG. 11, the memory management unit 11003 and the processing circuit 11002 are packaged together, and the memory management unit 11003 and the processing circuit 11002 are electrically connected. In addition, the memory management unit 11003 is directly connected to the bus, and the processing circuit 11002 is connected is connected to the bus through the memory management unit 11003. However, in an actual device, the memory management unit 11003 may alternatively be an independent component, or the processing circuit 11002 and the memory management unit 11003 are encapsulated together, and the processing circuit 11002 is directly connected to the bus. A layout manner of various components in the device 1100 is not limited in this application. The bus herein is a bus in the device, and may be specifically a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 11, but this does not mean that there is only one bus or only one type of bus in the device 1100.

The device 1100 corresponding to FIG. 11 may be a device in which the destination end or the second node is located, or may be the source end or the second node, and is configured to perform the method performed by the destination end or the first node. Therefore, for specific implementations, descriptions, and technical effects, refer to corresponding paragraphs of the method, the apparatus, and the system. Details are not described herein again.

In an embodiment, the device 1100 may include a plurality of processors. Each of the processors may be a single-core processor, or may be a multi-core processor. The processor herein may be one or more devices, circuits, and/or processing cores configured to process data (for example, computer program instructions). In addition, the computer program code in this embodiment of this application may be referred to as a computer program or code for short, or may be referred to as another name, and the computer instructions may be referred to as instructions or a command for short. This is not specifically limited in this embodiment of this application.

In addition, a person skilled in the art may understand that the device 1100 may include components more or less than those shown in FIG. 11. FIG. 11 merely shows components more related to a plurality of implementations disclosed in embodiments of the present invention. In an embodiment, the device 1100 may further include an output device and an input device. The output device communicates with the processing circuit (for example, the processing circuit 11002 or the processing circuit), and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor, and may receive an input of a user in a plurality of manners. For example, the input device may be a mouse, a keyboard, a touchscreen device, a sensor device, or the like. In addition, FIG. 11 does not show the high-performance interconnect bus, namely, a bus that is used for communication between devices and that is accessed by using a network device and whose function is similar to that of a wireless network.

It may be understood that, to implement the foregoing functions, the device or the apparatus includes corresponding hardware structures and/or software modules for implementing the functions. A person skilled in the art should be easily aware that, in combination with units and algorithm steps of the examples described in embodiments disclosed in this specification, embodiments of this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, functional modules of the device (for example, 1100) may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that module division in embodiments of this application is an example, and is merely logical function division. During actual implementation, there may be another division manner.

An embodiment of this application further provides a chip system. The chip system is used in the foregoing device. The chip system includes one or more interface circuits and one or more processors. The interface circuit and the processor are connected to each other through a line. The interface circuit is configured to receive a signal from a storage of a device, and send the signal to the processor. The signal includes computer instructions stored in the storage. When the processor executes the computer instructions, the foregoing device performs any method performed by the first node in the foregoing method embodiments.

An embodiment of this application further provides a computer storage medium. The computer storage medium includes computer instructions. When the computer instructions are run on a device, the device is enabled to perform any method performed by the first node in the foregoing method embodiments.

An embodiment of this application further provides a computer program product. When the computer program product runs on a computer, a device is enabled to perform any method performed by the first node in the foregoing method embodiments.

The device, the chip system, the computer storage medium, or the computer program product provided in this application is configured to perform the corresponding method provided above. Therefore, for beneficial effects that can be achieved, refer to the beneficial effects of the corresponding method provided above. Details are not described herein again.

Based on the descriptions of the foregoing implementations, a person skilled in the art may clearly understand that, for a purpose of convenient and brief description, division into the foregoing functional modules is used as an example for illustration. During actual application, the foregoing functions may be allocated to different functional modules and implemented according to a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A request processing method, applied to a network device of a first node, wherein the method comprises:
obtaining (601) a write request from a second node, wherein the write request indicates to write first data into first memory space of the first node;
obtaining (602) first information from a first location of the first memory space, wherein the first information indicates that the first memory space is in a state in which data writing is performed by a processor of the first node;
obtaining (603) second information from the first location after a preset time based on the first information, wherein the second information indicates that the first memory space is not in the state in which data writing is performed by the processor; and
writing (604) the first data into the first memory space based on the second information.

2. The method according to claim 1, wherein the first memory space is a memory object (object), the memory object comprises a plurality of cache lines, and the first location is at a header location of a header cache line in the plurality of cache lines.

3. The method according to claim 1 or 2, wherein the method further comprises:
obtaining an exclusive right of the first memory space before the writing the first data into the first memory space, and maintaining occupation of the exclusive right of the first memory space before the writing the first data into the first memory space is completed.

4. The method according to any one of claims 1 to 3, wherein the method further comprises:
before the obtaining first information from a first location of the first memory space, obtaining the exclusive right of the first memory space; and
releasing the exclusive right of the first memory space based on the first information indicating that the first memory space is in the state in which data writing is performed by the processor of the first node.

5. The method according to any one of claims 1 to 4, wherein the method further comprises:
obtaining a read request from the second node, wherein the read request indicates to read data from second memory space of the first node; and
after obtaining a shared access right of the second memory space, reading the data from the second memory space of the first node.

6. The method according to claim 5, wherein the reading the data from the second memory space of the first node comprises:
in a process of reading the data from the second memory space based on the read request, sensing that the second memory space is in a state in which data writing is performed by another network device of the first node, and terminating the process of reading the data from the second memory space; and
re-reading the data from the second memory space based on the re-obtained shared access right of the second memory space.

7. The method according to claim 5 or 6, wherein the method further comprises:
before the reading the data from the second memory space, obtaining third information from a second location of the first memory space, wherein the information at the second location indicates a latest version of the data in the first memory space;
after the reading the data from the second memory space, obtaining fourth information from the second location; and
when the fourth information is inconsistent with the third information, returning read failure information to the second node.

8. A request processing method, applied to a processor of a first node, wherein the method comprises:
obtaining (701) a first write request, wherein the first write request indicates to write first data into first memory space of the first node; **characterised by**
obtaining (702) first information from a first location of the first memory space, wherein the first information indicates that the first memory space is not in a state in which data writing is performed by a network device or another processor of the first node; and
writing (703) the first data into the first memory space based on the first information.

9. The method according to claim 8, wherein the first memory space is a memory object, the memory object comprises a plurality of cache lines, and the first location is at a header location of a header cache line in the plurality of cache lines.

10. The method according to claim 8 or 9, wherein the method further comprises:
obtaining a second write request, wherein the second write request indicates to write second data into second memory space of the first node;
obtaining second information from a first location of the second memory space, wherein the second information indicates that the second memory space is in the state in which data writing is performed by the network device or the another processor of the first node; and
returning data write failure information to the second node based on the second information.

11. The method according to any one of claims 8 to 10, wherein the method further comprises:
obtaining a read request, wherein the read request indicates to read data from the second memory space of the first node;
after reading the data from the second memory space based on the read request, obtaining third information from a second location of the second memory space, wherein the third information indicates that the second memory space is in the state in which data writing is performed by the network device or the another processor of the first node; and
determining, based on the third information, that data writing fails.

12. The method according to any one of claims 8 to 10, wherein the method further comprises:
obtaining a read request, wherein the read request indicates to read data from the second memory space of the first node;
obtaining fourth information from a second location of the second memory space, wherein the information at the second location indicates a latest version of the data in the second memory space;
after reading the data from the second memory space based on the read request, obtaining fifth information from the second location; and
when the fourth information is inconsistent with the fifth information, determining that reading fails.

13. A chip, wherein the chip comprises a processing circuit and an interface circuit, the interface circuit is interconnected with the processing circuit through a line, the interface circuit is configured to: receive a signal from a storage medium, and send the signal to the processor, wherein the signal comprises computer instructions stored in the storage medium; and the chip is configured to perform the request processing method according to any one of claims 1 to 12 when the computer instructions are executed by the processing circuit.

14. A computer storage medium, comprising computer instructions, wherein when the computer instructions are run on a computer, the computer is enabled to perform the request processing method according to any one of claims 1 to 12.

15. A computer program product, comprising a computer program, wherein when the computer program is executed by one or more processors, the method according to any one of claims 1 to 12 is implemented.

## Patentansprüche

1. Anforderungsverarbeitungsverfahren, das in einer Netzwerkvorrichtung eines ersten Knotens angewandt wird, wobei das Verfahren umfasst:
Erhalten (601) einer Schreibanforderung von einem zweiten Knoten, wobei die Schreibanforderung anzeigt, erste Daten in einen ersten Speicherraum des ersten Knotens zu schreiben;
Erhalten (602) von ersten Informationen von einem ersten Ort des ersten Speicherraums, wobei die ersten Informationen anzeigen, dass sich der erste Speicherraum in einem Zustand befindet, in dem das Schreiben von Daten von einem Prozessor des ersten Knotens durchgeführt wird;
Erhalten (603) von zweiten Informationen von dem ersten Ort nach einer voreingestellten Zeit basierend auf den ersten Informationen, wobei die zweiten Informationen anzeigen, dass sich der erste Speicherraum nicht in dem Zustand befindet, in dem das Schreiben von Daten von dem Prozessor durchgeführt wird; und
Schreiben (604) der ersten Daten in den ersten Speicherraum basierend auf den zweiten Informationen.

2. Verfahren nach Anspruch 1, wobei der erste Speicherraum ein Speicherobjekt (Objekt) ist, wobei das Speicherobjekt eine Vielzahl von Cache-Zeilen umfasst und wobei sich der erste Ort an einem Kopfzeilenort einer Kopfzeile einer Cache-Zeile in der Vielzahl von Cache-Zeilen befindet.

3. Verfahren nach Anspruch 1 oder 2, wobei das Verfahren ferner umfasst:
Erhalten eines exklusiven Rechts für den ersten Speicherraum vor dem Schreiben der ersten Daten in den ersten Speicherraum und Beibehalten des Besitzes des exklusiven Rechts für den ersten Speicherraum, bevor das Schreiben der ersten Daten in den ersten Speicherraum abgeschlossen ist.

4. Verfahren nach einem der Ansprüche 1 bis 3, wobei das Verfahren ferner umfasst:
vor dem Erhalten von ersten Informationen von einem ersten Ort des ersten Speicherraums, Erhalten des exklusiven Rechts für den ersten Speicherraum; und
Freigeben des exklusiven Rechts für den ersten Speicherraum basierend auf den ersten Informationen, die anzeigen, dass sich der erste Speicherraum in dem Zustand befindet, in dem das Schreiben von Daten von dem Prozessor des ersten Knotens durchgeführt wird.

5. Verfahren nach einem der Ansprüche 1 bis 4, wobei das Verfahren ferner umfasst:
Erhalten einer Leseanforderung von dem zweiten Knoten, wobei die Leseanforderung anzeigt, Daten aus einem zweiten Speicherraum des ersten Knotens zu lesen; und
nach einem Erhalten eines gemeinsam genutzten Zugriffsrechts auf den zweiten Speicherraum, Lesen der Daten aus dem zweiten Speicherraum des ersten Knotens.

6. Verfahren nach Anspruch 5, wobei das Lesen der Daten aus dem zweiten Speicherraum des ersten Knotens umfasst:
in einem Prozess eines Lesens der Daten aus dem zweiten Speicherraum basierend auf der Leseanforderung, Erfassen, dass sich der zweite Speicherraum in einem Zustand befindet, in dem das Schreiben von Daten von einer anderen Netzwerkvorrichtung des ersten Knotens durchgeführt wird, und Beenden des Prozesses des Lesens der Daten aus dem zweiten Speicherraum; und
erneutes Lesen der Daten aus dem zweiten Speicherraum basierend auf dem erneut erhaltenen gemeinsam genutzten Zugriffsrecht auf den zweiten Speicherraum.

7. Verfahren nach Anspruch 5 oder 6, wobei das Verfahren ferner umfasst:
vor dem Lesen der Daten aus dem zweiten Speicherraum, Erhalten von dritten Informationen von einem zweiten Ort des ersten Speicherraums, wobei die Informationen an dem zweiten Ort eine neueste Version der Daten in dem ersten Speicherraum anzeigen;
nach dem Lesen der Daten aus dem zweiten Speicherraum, Erhalten von vierten Informationen von dem zweiten Ort; und
wenn die vierten Informationen unstimmig mit den dritten Informationen sind, Zurücksenden von Lesefehlerinformationen an den zweiten Knoten.

8. Anforderungsverarbeitungsverfahren, das in einem Prozessor eines ersten Knotens angewandt wird, wobei das Verfahren umfasst:
Erhalten (701) einer ersten Schreibanforderung, wobei die erste Schreibanforderung anzeigt, erste Daten in einen ersten Speicherraum des ersten Knotens zu schreiben; **gekennzeichnet durch**:
Erhalten (702) von ersten Informationen von einem ersten Ort des ersten Speicherraums, wobei die ersten Informationen anzeigen, dass sich der erste Speicherraum nicht in einem Zustand befindet, in dem das Schreiben von Daten von einer Netzwerkvorrichtung oder einem anderen Prozessor des ersten Knotens durchgeführt wird; und
Schreiben (703) der ersten Daten in den ersten Speicherraum basierend auf den ersten Informationen.

9. Verfahren nach Anspruch 8, wobei der erste Speicherraum ein Speicherobjekt ist, wobei das Speicherobjekt eine Vielzahl von Cache-Zeilen umfasst und wobei sich der erste Ort an einem Kopfzeilenort einer Kopfzeile einer Cache-Zeile in der Vielzahl von Cache-Zeilen befindet.

10. Verfahren nach Anspruch 8 oder 9, wobei das Verfahren ferner umfasst:
Erhalten einer zweiten Schreibanforderung, wobei die zweite Schreibanforderung anzeigt, zweite Daten in einen zweiten Speicherraum des ersten Knotens zu schreiben;
Erhalten von zweiten Informationen von einem ersten Ort des zweiten Speicherraums, wobei die zweiten Informationen anzeigen, dass sich der zweite Speicherraum in dem Zustand befindet, in dem das Schreiben von Daten von der Netzwerkvorrichtung oder dem anderen Prozessor des ersten Knotens durchgeführt wird; und
Zurücksenden von Datenschreibfehlerinformationen an den zweiten Knoten basierend auf den zweiten Informationen.

11. Verfahren nach einem der Ansprüche 8 bis 10, wobei das Verfahren ferner umfasst:
Erhalten einer Leseanforderung, wobei die Leseanforderung anzeigt, Daten aus einem zweiten Speicherraum des ersten Knotens zu lesen;
nach dem Lesen der Daten aus dem zweiten Speicherraum basierend auf der Leseanforderung, Erhalten von dritten Informationen von einem zweiten Ort des zweiten Speicherraums, wobei die dritten Informationen anzeigen, dass sich der zweite Speicherraum in dem Zustand befindet, in dem das Schreiben von Daten von der Netzwerkvorrichtung oder dem anderen Prozessor des ersten Knotens durchgeführt wird; und
Ermitteln, basierend auf den dritten Informationen, dass das Schreiben von Daten fehlgeschlagen ist.

12. Verfahren nach einem der Ansprüche 8 bis 10, wobei das Verfahren ferner umfasst:
Erhalten einer Leseanforderung, wobei die Leseanforderung anzeigt, Daten aus einem zweiten Speicherraum des ersten Knotens zu lesen;
Erhalten von vierten Informationen von einem zweiten Ort des ersten Speicherraums, wobei die Informationen an dem zweiten Ort eine neueste Version der Daten in dem zweiten Speicherraum anzeigen;
nach dem Lesen der Daten aus dem zweiten Speicherraum basierend auf der Leseanforderung, Erhalten von fünften Informationen von dem zweiten Ort; und
wenn die vierten Informationen unstimmig mit den fünften Informationen sind, Ermitteln, dass das Lesen fehlgeschlagen ist.

13. Chip, wobei der Chip eine Verarbeitungsschaltung und eine Schnittstellenschaltung umfasst, wobei die Schnittstellenschaltung über eine Leitung mit der Verarbeitungsschaltung verbunden ist, wobei die Schnittstellenschaltung konfiguriert ist zum: Empfangen eines Signals von einem Speichermedium und Senden des Signals an den Prozessor, wobei das Signal Computeranweisungen umfasst, die in dem Speichermedium gespeichert sind; und wobei der Chip konfiguriert ist zum Durchführen des Anforderungsverarbeitungsverfahrens nach einem der Ansprüche 1 bis 12, wenn die Computeranweisungen von der Verarbeitungsschaltung ausgeführt werden.

14. Computerspeichermedium, das Computeranweisungen umfasst, wobei, wenn die Computeranweisungen in einem Computer ausgeführt werden, der Computer aktiviert wird, um das Verfahren nach einem der Ansprüche 1 bis 12 durchzuführen.

15. Computerprogrammprodukt, das ein Computerprogramm umfasst, wobei, wenn das Computerprogramm von einem oder mehreren Prozessoren ausgeführt wird, das Verfahren nach einem der Ansprüche 1 bis 12 implementiert wird.

## Revendications

1. Procédé de traitement de demande, appliqué à un dispositif réseau d'un premier nœud, dans lequel le procédé comprend :
l'obtention (601) d'une demande d'écriture en provenance d'un deuxième nœud, la demande d'écriture indiquant d'écrire des premières données dans un premier espace mémoire du premier nœud ;
l'obtention (602) des premières informations en provenance d'un premier emplacement du premier espace mémoire, les premières informations indiquant que le premier espace mémoire est dans un état dans lequel une écriture de données est réalisée par un processeur du premier nœud ;
l'obtention (603) de deuxièmes informations en provenance du premier emplacement après un temps prédéterminé sur la base des premières informations, les deuxièmes informations indiquant que le premier espace mémoire n'est pas dans l'état dans lequel l'écriture de données est réalisée par le processeur ; et
l'écriture (604) des premières données dans le premier espace mémoire sur la base des deuxièmes informations.

2. Procédé selon la revendication 1, dans lequel le premier espace mémoire est un objet de mémoire (objet), l'objet de mémoire comprend une pluralité de lignes de mémoire cache, et le premier emplacement se trouve au niveau d'un emplacement d'en-tête d'une ligne de mémoire cache d'en-tête dans la pluralité de lignes de mémoire cache.

3. Procédé selon la revendication 1 ou 2, dans lequel le procédé comprend en outre :
l'obtention d'un droit exclusif du premier espace mémoire avant l'écriture des premières données dans le premier espace mémoire, et le maintien d'une occupation du droit exclusif du premier espace mémoire avant la fin de l'écriture des premières données dans le premier espace mémoire.

4. Procédé selon l'une quelconque des revendications 1 à 3, dans lequel le procédé comprend en outre :
avant l'obtention de premières informations en provenance d'un premier emplacement du premier espace mémoire, l'obtention du droit exclusif du premier espace mémoire ; et
la libération du droit exclusif du premier espace mémoire sur la base des premières informations indiquant que le premier espace mémoire est dans l'état dans lequel une écriture de données est réalisée par le processeur du premier nœud.

5. Procédé selon l'une quelconque des revendications 1 à 4, dans lequel le procédé comprend en outre :
l'obtention d'une demande de lecture en provenance du deuxième nœud, la demande de lecture indiquant de lire des données depuis le deuxième espace mémoire du premier nœud ; et
après l'obtention d'un droit d'accès partagé du deuxième espace mémoire, la lecture des données depuis le deuxième espace mémoire du premier nœud.

6. Procédé selon la revendication 5, dans lequel la lecture des données depuis le deuxième espace mémoire du premier nœud comprend :
dans un processus de lecture des données depuis le deuxième espace mémoire sur la base de la demande de lecture, la détection que le deuxième espace mémoire est dans un état dans lequel l'écriture de données est réalisée par un autre dispositif réseau du premier nœud, et la fin du processus de lecture des données depuis le deuxième espace mémoire ; et
la relecture des données depuis le deuxième espace mémoire sur la base du droit d'accès partagé ré-obtenu du deuxième espace mémoire.

7. Procédé selon la revendication 5 ou 6, dans lequel le procédé comprend en outre :
avant la lecture des données dans le deuxième espace mémoire, l'obtention de troisièmes informations en provenance d'un deuxième emplacement du premier espace mémoire, des informations au deuxième emplacement indiquant une dernière version des données dans le premier espace mémoire ;
après la lecture des données depuis le deuxième espace mémoire, l'obtention de quatrièmes informations en provenance du deuxième emplacement ; et
lorsque les quatrièmes informations sont incohérentes avec les troisièmes informations, le renvoi d'informations d'échec de lecture au deuxième nœud.

8. Procédé de traitement de demande, appliqué à un processeur d'un premier nœud, dans lequel le procédé comprend :
l'obtention (701) d'une première demande d'écriture, la première demande d'écriture indiquant d'écrire des premières données dans un premier espace mémoire du premier nœud ; **caractérisé par**
l'obtention (702) des premières informations en provenance d'un premier emplacement du premier espace mémoire, les premières informations indiquant que le premier espace mémoire n'est pas dans un état dans lequel une écriture de données est réalisée par un dispositif réseau ou un autre processeur du premier nœud ; et
l'écriture (703) des premières données dans le premier espace mémoire sur la base des premières informations.

9. Procédé selon la revendication 8, dans lequel le premier espace mémoire est un objet de mémoire, l'objet de mémoire comprend une pluralité de lignes de mémoire cache, et le premier emplacement se trouve au niveau d'un emplacement d'en-tête d'une ligne de mémoire cache d'en-tête dans la pluralité de lignes de mémoire cache.

10. Procédé selon la revendication 8 ou 9, dans lequel le procédé comprend en outre :
l'obtention d'une deuxième demande d'écriture, la deuxième demande d'écriture indiquant d'écrire des deuxièmes données dans le deuxième espace mémoire du premier nœud ;
l'obtention de deuxièmes informations en provenance d'un premier emplacement du deuxième espace mémoire, les deuxièmes informations indiquant que le deuxième espace mémoire est dans l'état dans lequel une écriture de données est réalisée par le dispositif de réseau ou l'autre processeur du premier nœud ; et
le renvoi d'informations d'échec d'écriture de données au deuxième nœud sur la base des deuxièmes informations.

11. Procédé selon l'une quelconque des revendications 8 à 10, dans lequel le procédé comprend en outre :
l'obtention d'une demande de lecture, la demande de lecture indiquant de lire des données depuis le deuxième espace mémoire du premier nœud ;
après la lecture des données depuis le deuxième espace mémoire sur la base de la demande de lecture, l'obtention de troisièmes informations en provenance d'un deuxième emplacement du deuxième espace mémoire, les troisièmes informations indiquant que le deuxième espace mémoire est dans l'état dans lequel une écriture de données est réalisée par le dispositif de réseau ou l'autre processeur du premier nœud ; et
la détermination, sur la base des troisièmes informations, que l'écriture de données échoue.

12. Procédé selon l'une quelconque des revendications 8 à 10, dans lequel le procédé comprend en outre :
l'obtention d'une demande de lecture, la demande de lecture indiquant de lire des données depuis le deuxième espace mémoire du premier nœud ;
l'obtention de quatrièmes informations en provenance d'un deuxième emplacement du deuxième espace mémoire, les informations au deuxième emplacement indiquant une dernière version des données dans le deuxième espace mémoire ;
après la lecture des données depuis le deuxième espace mémoire sur la base de la demande de lecture, l'obtention de cinquièmes informations dans le deuxième emplacement ; et
lorsque les quatrièmes informations sont incompatibles avec les cinquièmes informations, la détermination que la lecture échoue.

13. Puce, dans laquelle la puce comprend un circuit de traitement et un circuit d'interface, le circuit d'interface est interconnecté avec le circuit de traitement par l'intermédiaire d'une ligne, le circuit d'interface est configuré pour : recevoir un signal en provenance d'un support de stockage, et envoyer le signal au processeur, le signal comprenant des instructions informatiques stockées dans le support de stockage ; et la puce est configurée pour réaliser le procédé de traitement de demande selon l'une quelconque des revendications 1 à 12 lorsque les instructions informatiques sont exécutées par le circuit de traitement.

14. Support de stockage informatique, comprenant des instructions informatiques, lorsque les instructions informatiques sont exécutées sur un ordinateur, l'ordinateur pouvant réaliser le procédé de traitement de demande selon l'une quelconque des revendications 1 à 12.

15. Produit programme informatique, comprenant un programme informatique, lorsque le programme informatique est exécuté par un ou plusieurs processeurs, le procédé selon l'une quelconque des revendications 1 à 12 étant mis en œuvre.
